Europäisches Patentamt

European Patent Office

Office européen des brevets

(19)

(11) **EP 0 593 067 B1**

(12) **EUROPÄISCHE PATENTSCHRIFT**

(45) Veröffentlichungstag und Bekanntmachung des Hinweises auf die Patenterteilung:
**09.04.1997 Patentblatt 1997/15**

(51) Int Cl.[6]: **G01B 11/275**

(21) Anmeldenummer: **93116690.4**

(22) Anmeldetag: **15.10.1993**

(54) **Verfahren und Vorrichtung zur Bestimmung der Orientierung und Lage von Objekten mit Hilfe von Laserstrahlen**

Procedure and device for the determination of the orientation and position of objects with laserbeams

Dispositif et procédé pour la détermination de l'orientation et la position d'objets à l'aide de rayons lasers

(84) Benannte Vertragsstaaten:
**BE DE ES FR GB IT PT SE**

(30) Priorität: **16.10.1992 DE 4234986**

(43) Veröffentlichungstag der Anmeldung:
**20.04.1994 Patentblatt 1994/16**

(73) Patentinhaber: **SCHENCK KOMEG GmbH**
**D-66571 Eppelborn (DE)**

(72) Erfinder:
• **Sander, Horst**
**D-66265 Heusweiler (DE)**

• **Tentrup, Thomas, Dr. rer. nat.**
**D-66459 Kirkel (DE)**
• **Weiser, Hans-Peter, Dr.Ing.**
**D-66386 St. Ingbert (DE)**
• **Becker, Thomas, Dr. Ing.**
**D-66806 Ensdorf (DE)**

(74) Vertreter: **Vièl, Georg, Dipl.-Ing.**
**Patentanwälte VIEL & VIEL,**
**Postfach 65 04 03**
**66143 Saarbrücken (DE)**

(56) Entgegenhaltungen:
WO-A-91/00982          FR-A- 2 319 141
US-A- 4 889 425

**Beschreibung**

Die Erfindung bezieht sich auf ein Verfahren und eine Vorrichtung zur Bestimmung der Orientierung und Lage von Objekten mit Hilfe von Laserstrahlen, die Referenzachsen bilden und Abweichungen des Objekts gegenüber den Referenzachsen an Photodetektoren anzeigen.

Eine Vorrichtung zur Kontrolle der Stellung eines beweglichen Organs, das beispielsweise ein Taster zur Kontrolle von Maßen eines Gegenstandes darstellt, wird in der DE-OS 28 29 222 offenbart. Hierbei wird die Änderung bestimmter translatorischer und rotatorischer Freiheitsgrade des beweglichen Organs, das mit dem Gegenstand in Berührung tritt, längs wenigstens zweier Bezugsachsen erfaßt. Das Organ, das auf einem Schlitten sitzt, ist längs zweier, zueinander senkrechter Gleitführungen verschiebbar: die eine Gleitführung, längs der sich der Schlitten bewegt, ist an einem Arm angeordnet, die zweite Gleitführung, längs der sich der Arm bewegt, ist an einem senkrecht stehenden Gestell angeordnet. Parallel zu den Gleitführungen werden ein oder mehrere Laserstrahlen als Bezugsachsen geführt und Positionsänderungen der Laserstrahlen, die durch eine geeignete, fest mit dem beweglichen Organ verbundene Ablenkoptik auf Detektoren gesendet werden, gegenüber Bezugsstellungen bestimmt. Als Nachteil erweist sich, daß durch die Bewegung des Organs sowie durch mögliche Torsionen des Gestells, deren Wirkung durch die Länge des Arms noch vervielfacht wird, und durch Abweichung von der Geradheit, die Messungen verfälscht werden.

Vorrichtungen zur Bestimmung der Lage eines Objekts mit zwei Laserstrahlen und positionsempfindlichen Photodetektoren sind aus DE 37 14 776 A1 und DE 37 10 068 A1 bekannt.

US-A-4,889,425 offenbart eine Vorrichtung zur Bestimmung der Lage einer Anzahl von Punkten einer Oberfläche, bei der der Strahl eines Lasers in zwei Teilstrahlen aufgeteilt wird, von denen jeder eine Anzahl von weiteren, hintereinander angeordneten Strahlteilern durchläuft. Die von diesen Strahlteilern abgeteilten Teilstrahlen fallen jeweils eine Videokamera. Die Strahlteiler und Videokameras sind auf den zu bestimmenden Punkten der Oberfläche montiert. Aus den Auftrefforten der jeweiligen Teilstrahlen auf die ihnen zugeordneten Videokameras wird auf die Lage der Punkte geschlossen. Die Anordnung nach US-A-4,889,425 offenbart nicht zwei Einfallsstrahlen, die auf einen einzigen Strahlteiler auftreffen.

Die in DE 37 14 776 A1 dargestellte Vorrichtung besteht aus einer Sendeeinheit und Empfangseinheit. Von der Sendeeinheit gehen zwei Laserstrahlen aus, die über eine Strahlteileroptik aus einem Laser erzeugt werden und die in einem Winkel zueinander verlaufen. Diese Laserstrahlen treffen auf die Empfangseinheit, wobei der eine Laserstrahl direkt auf einen positionsempfindlichen Photodetektor trifft und der andere Laserstrahl von zwei unterschiedlich orientierten Strahlteilerwürfeln in drei Teilstrahlen aufgespalten wird so, daß diese Teilstrahlen auf drei positionsempfindliche Photodetektoren treffen. Aus den Auftreffpunktkoordinatenpaaren der vier Photodetektoren der Empfangseinheit wird die Orientierung und Lage der Empfangseinheit relativ zur Sendeeinheit berechnet, wobei speziell der Abstand zwischen Sendeeinheit und Empfangseinheit über das Triangulationsprinzip bestimmt wird.

Die in DE 37 10 068 A1 darstellte Vorrichtung besteht aus einem Meßkopf und einer Referenzeinheit mit zwei Lasern und einem Interferometer. Die Referenzeinheit sendet zwei parallele Laserstrahlen aus und empfängt einen von diesen parallel reflektiert vom Meßkopf zur interferometrischen Bestimmung des Abstandes. Jeder der parallelen Laserstrahlen durchläuft ein Interferenzfilter, eine optische Anordnung zur Vergrößerung des Meßbereichs und einen Strahlteilerwürfel. Der durch den Strahlteilerwürfel durchlaufende Anteil beider Laserstrahlen trifft dann auf einen positionsempfindlichen Photodetektor. Der im Strahlteilerwürfel reflektierte Anteil des einen Laserstrahls fällt ebenfalls auf einen positionsempfindlichen Detektor, während der reflektierte Anteil des anderen Laserstrahls auf einen Tripelspiegel trifft und parallel versetzt über den Strahlteilerwürfel zur Referenzeinheit zurückläuft. Aus den Meßwerten des Interferometers und den Auftreffkoordinatenpaaren der drei Photodetektoren wird die Lage und Orientierung des Meßkopfes gegenüber der Referenzeinheit berechnet.

Eine Vorrichtung zur Spur- und Sturzwinkelmessung mit einer Meßeinheit, die am Rad eines Kraftfahrzeuges befestigt ist und auf die ein Laserstrahl trifft, ist aus DE 35 23 040 A1 bekannt. Der Laserstrahl geht von einem Laser aus, der verschiebbar auf einem feststehenden Balken vor dem Kraftfahrzeug montiert ist. Die Orientierung der Meßeinheit und damit die des Rades wird dabei nicht allein mit einer optischen Vorrichtung, sondern nur im Zusammenhang mit Inklinometern erfaßt.

Ein Nachteil der obigen Vorrichtungen ist, daß die Laserstrahlen die dargestellten Meßvorrichtungen nicht durchlaufen und somit eine gleichzeitige Messung der Orientierung und Lage von mehreren Objekten im gleichen Referenzsystem aufgespannt durch die Laserstrahlen nicht möglich ist.

Weiterhin ist allgemein bekannt, zur Ermittlung und Überprüfung von Fahrwerkparametern, wie Radspur und -sturz sowie Dackellauf eines Kraftfahrzeuges am Ende der Produktionslinie als Bezugssystem eine Referenz heranzuziehen, die weitläufig als Referenz- oder Idealfahrzeug bezeichnet werden kann. Die Referenz wird durch einen sogenannten Einrichtmeister realisiert, der in den Fahrwerkstand an vorgegebenen Positionen in spezielle Aufnehmer eingesteckt wird und aus einem Metallrahmen in den Abmessungen eines Kraftfahrzeuges mit einem bestimmten Radstand besteht. An dem Rahmen sind entsprechend der vier Räder eines Kraftfahrzeuges vier Platten befestigt, wobei jede Platte den Spur- und Sturzwinkel Null repräsentiert. Zur Kalibrierung des Fahrwerkstandes für Spur-, Sturz- und

# EP 0 593 067 B1

Dackellaufmessungen werden diese vier Platten von vier Meßeinheiten des Fahrwerkstandes wie ein normales Fahrzeug vermessen und diese Meßwerte bei der Vermessung des "echten" Fahrzeuges durch die Meßeinheiten verrechnet. Ein Nachteil dieses Verfahrens besteht darin, daß die Meßeinheiten vor den Messungen an Hand einer Referenz, z.B. eines derartigen, wegen seiner Größe umständlich zu handhabenden Einrichtmeisters kalibriert werden müssen und die Referenz für die Vermessung des Kraftfahrzeuges aus dem Fahrwerkstand entfernt werden muß; das ist umständlich und zeitaufwendig. Außerdem erfordert die Lagerung des Einrichtmeisters wegen seiner Größe einen erhöhten Platzbedarf.

Der Erfindung liegt deshalb die Aufgabe zugrunde, ein Verfahren und eine Vorrichtung zu entwickeln, die die Bestimmung der Orientierung und Lage von ebenen Platten, bei einfachem, apparativem Aufwand mit hoher Genauigkeit gestatten und einen Fahrwerkstand zu realisieren, an dem hochpräzise Messungen der Fahrwerksgeometrie eines Kraftfahrzeuges durchführbar sind, ohne daß dazu eine Kalibrierung mit einem konventionellen, mechanischen Einrichtmeister notwendig ist.

Diese Aufgabe wird erfindungsgemäß dadurch gelöst, daß zwei parallel zueinander verlaufende, eine Referenzebene aufspannende Laserstrahlen

- das eine Mal ungestört auf zwei feststehende senkrecht zu den Laserstrahlen angeordnete erste positionsempfindliche Photodetektoren treffen und zwei Auftreffpunktkoordinatenpaare für die Laserstrahlen über ihre Intensitätsschwerpunkte bestimmt werden,

- das andere Mal in den Strahlengang der Laserstrahlen eine Strahlteileroptik eingebracht wird, deren Lage vom Objekt abhängt und innerhalb derer die Laserstrahlen in durch sie durchgehende Strahlen und in reflektierte Strahlen mit davon abweichender Richtung aufgespalten werden,

- die durchgehenden Strahlen auf die ersten positionsempfindlichen Photodetektoren treffen und ihre zwei Auftreffpunktkoordinatenpaare ebenfalls bestimmt werden,

- die reflektierten Strahlen auf zwei weitere an der ersten Strahlteileroptik angeordnete positionsempfindliche Photodetektoren treffen und ihre zwei Auftreffpunktkoordinatenpaare ebenfalls bestimmt werden, und

- die Orientierung und Lage des Objekts aus den vier gemessenen Koordinatenpaaren der zwei auf die ersten Photodetektoren jeweils mit und ohne Strahlteileroptik auftreffenden Laserstrahlen und aus den zwei gemessenen Koordinatenpaaren der reflektierten, auf die weiteren Photodetektoren treffenden Laserstrahlen in Bezug zu der Referenzebene, die durch die ungestört auf die ersten Photodetektoren treffenden Laserstrahlen festgelegt ist, berechnet werden.

Eine vorteilhafte Weiterbildung des erfindungsgemäßen Verfahrens besteht darin, daß eine zusätzliche, feststehende Strahlteileroptik dauerhaft in den Strahlengang der Laserstrahlen zwischen die Laser und der ersten Strahlteileroptik positioniert wird, die die Laserstrahlen in durch sie durchgehende Strahlen und in reflektierte Strahlen mit davon abweichender Richtung aufspalten, daß die reflektierten Strahlen auf zwei zusätzliche, feststehende positionsempfindliche Photodetektoren treffen und ihre zwei Auftreffpunktkoordinatenpaare bestimmt werden, daß die durchgehenden Strahlen auf die erste Strahlteileroptik treffen, deren Lage von dem Objekt abhängt, und in durch sie durchgehende auf die ersten Photodetektoren treffende Strahlen und in reflektierte auf die weiteren an der ersten Strahlteileroptik angeordnete Photodetektoren treffende Strahlen aufgespalten werden, daß die Orientierung und Lage des Objekts aus den zwei gemessenen Koordinatenpaaren der auf die ersten Photodetektoren treffenden Laserstrahlen, aus den zwei gemessenen Koordinatenpaaren der auf die an der ersten Strahlteileroptik angeordneten Photodetektoren reflektierten Strahlen und aus den zwei gemessenen Koordinatenpaaren der auf die zusätzlichen feststehenden Photodetektoren reflektierten Strahlen berechnet werden, wobei die letztgenannten Koordinatenpaare anstelle der Koordinatenpaare der ungestört auf die ersten Photodetektoren treffenden Laserstrahlen zur On-Line-Kalibrierung der Referenzebene benutzt werden.

Ein erfindungsgemäßes Verfahren zur Spur- und Sturzwinkelbestimmung der Räder eines Kraftfahrzeugs ist dadurch gegeben, daß zur Spur- und Sturzwinkelbestimmung der Räder eines Kraftfahrzeugs die parallelen Laserstrahlen senkrecht übereinander in Höhe der Räder am gesamten Fahrzeug entlanglaufen, daß ein Rad jeweils senkrecht zur Radachse an seinem Umfang außen von einer ebenen Platte, auf deren dem Rad abgewandter Seite die erste Strahlteileroptik befestigt ist, so angetastet wird, daß die ebene Platte die Lage und Orientierung des Rades annimmt und die erste Strahlteileroptik in den Strahlengang der beiden Laserstrahlen gelangt, wobei die innerhalb der ersten Strahlteileroptik reflektierten Strahlen von der ebenen Platte weg verlaufen.

Erfindungsgemäß ist vorgesehen, daß Vorder- und Hinterräder jeweils einzeln nacheinander von der Platte angetastet werden.

3

EP 0 593 067 B1

Vorteilhaft ist es nach der Erfindung, daß Vorder- und Hinterräder gleichzeitig von je einer Platte mit Strahlteileroptik angetastet werden und daß Koordinaten der durch die am Vorderrad angeordneten Strahlteileroptik durchgehenden Strahlen an positionsempfindlichen Photodetektoren einer Detektoreinheit zwischen Vorder- und Hinterrad, die die Laserstrahlen ansonsten passieren können, zusätzlich bestimmt werden.

Eine weitere Ausführung des erfindungsgemäßen Verfahrens besteht darin, daß zwei Paare paralleler Laserstrahlen senkrecht übereinander parallel in Höhe der Räder am gesamten Kraftfahrzeug entlanglaufen und daß Vorder- und Hinterräder gleichzeitig von je einer Platte mit Strahlteileroptik so angetastet werden, daß die Strahlteileroptik der Platte am Vorderrad in den Strahlengang des oberen Laserstrahlenpaares und die Strahlteileroptik der Platte am Hinterrad in den Strahlengang des unteren Laserstrahlenpaares gelangen.

Eine Vorrichtung zur Bestimmung der Orientierung und Lage eines Objekts ist ausgestattet mit

- zwei in einer Ebene senkrecht übereinander angeordneten Lasern,

- zwei in einem Abstand in gleicher, fester Anordnung senkrecht zu den parallel verlaufenden Laserstrahlen der Laser ausgerichteten ersten positionsempfindlichen Photodetektoren,

- einer ersten Strahlteileroptik, die in den Strahlengang der parallelen Laserstrahlen und abhängig von der Lage des Objekts einführbar ist, wobei die erste Strahlteileroptik die Laserstrahlen in durch sie durchgehende Strahlen und in reflektierte Strahlen mit davon abweichender Richtung aufspaltet,

- zwei weiteren positionsempfindlichen Photodetektoren an der ersten Strahlteileroptik, die senkrecht in einer Ebene angeordnet sind, die ihrerseits senkrecht zu der Eintrittsfläche der Laserstrahlen in die erste Strahlteileroptik orientiert ist, und auf die die reflektierten Strahlen senkrecht auftreffen, und

- Mitteln zur Erfassung der jeweiligen Auftreffpunktkoordinaten der Laserstrahlen auf den Photodektoren und zur Berechnung der Orientierung und Lage des Objekts in Bezug zu der Referenzebene daraus.

Eine vorteilhafte Weiterbildung der erfindungsgemäßen Vorrichtung ergibt sich dadurch, daß eine zusätzliche Strahlteileroptik dauerhaft in fester Anordnung zu den Lasern in den Strahlengang der parallel verlaufenden Laserstrahlen vor der von der Lage des Objekts abhängigen ersten Strahlteileroptik angeordnet ist, daß die von der zusätzlichen Strahlteileroptik reflektierten Strahlen auf zwei zusätzliche, positionsempfindliche Photodetektoren treffen, die in fester Anordnung zu der zusätzlichen Strahlteileroptik positioniert sind, und daß die durch die zusätzliche Strahlteileroptik durchgehenden Strahlen auf die von der Lage des Objekts abhängigen ersten Strahlteileroptik treffen und in durchgehende auf die ersten Photodetektoren treffende Strahlen und in reflektierte auf die an der ersten Strahlteileroptik angeordneten, weiteren Photodetektoren treffende Strahlen aufspalten, und daß Mittel zur Erfassung der Auftreffpunktkoordinaten der Laserstrahlen auf den Photodetektoren und zur Berechnung der Lage und der Orientierung des Objekts daraus in Bezug zu der Referenzebene vorhanden sind.

Eine erfindungsgemäße Vorrichtung zur Spur- und Sturzwinkelbestimmung der Räder eines Kraftfahrzeugs besteht darin, daß zur Spur- und Sturzwinkelbestimmung der Räder eines Kraftfahrzeugs eine Lasereinheit vor dem in einem Fahrwerkstand angeordneten Kraftfahrzeug und ihr gegenüber hinter dem Kraftfahrzeug eine zugeordnete Detektoreinheit vorgesehen sind, daß die Lasereinheit rechts und links im Abstand der Breite des Kraftfahrzeugs die zwei in einer Ebene senkrecht übereinander angeordneten Laser aufweist, deren parallele Laserstrahlen in Höhe der Räder in Längsrichtung am gesamten Kraftfahrzeug entlanglaufen, daß die Detektoreinheit rechts und links in gleicher Anordnung wie die Laser die zwei in einer Ebene senkrecht übereinander angeordneten ersten positionsempfindlichen Photodetektoren aufweist, auf die die Laserstrahlen der Laser auftreffen, daß weiterhin eine Meßeinheit vorgesehen ist, die aus einer ebenen Platte und der auf der dem Rad abgewandten Seite der ebenen Platte befestigten ersten Strahlteileroptik besteht, wobei die Meßeinheit über die ebene Platte so an den Umfang eines Rades antastbar ist, daß die erste Strahlteileroptik in den Strahlengang der parallelen Laserstrahlen eingeführt wird und die in der ersten Strahlteileroptik reflektierten Strahlen von der ebenen Platte weg verlaufen.

Eine Weiterbildung der erfindungsgemäßen Vorrichtung besteht darin, daß für jedes Rad eine eigene Meßeinheit sowie zwischen Vorder- und Hinterrad auf jeder Seite des Kraftfahrzeugs eine mittlere Detektoreinheit mit weiteren positionsempfindlichen Photodetektoren vorgesehen sind.

Eine vorteilhafte Ausführung einer Vorrichtung zur Bestimmung der Spur- und Sturzwinkel der Räder eines Kraftfahrzeugs ist dadurch gegeben, daß für jedes Rad eine eigene Meßeinheit vorgesehen ist, daß die Lasereinheit rechts und links im Abstand der Breite des Kraftfahrzeugs zusätzlich zu dem ersten Laserpaar ein weiteres senkrecht unter dem ersten Laserpaar angeordnetes zweites Laserpaar aufweist, daß die parallelen, paarweise zusammengehörenden Laserstrahlen in Höhe der Räder in Längsrichtung am gesamten Kraftfahrzeug entlanglaufen, daß die Detektoreinheit hinter dem Kraftfahrzeug rechts und links in gleicher Anordnung wie die Laser zusätzlich zu den ersten Photodetektoren

4

zwei weitere senkrecht unter den ersten Photodetektoren angeordnete positionsempfindliche Photodetektoren aufweist, wobei dem oberen Laserstrahlenpaar die oberen ersten Photodetektoren und dem unteren Laserstrahlenpaar die unteren weiteren Photodetektoren sowie die Strahlteileroptik der vorderen Meßeinheit dem oberen Laserstrahlenpaar und die Strahlteileroptik der hinteren Meßeinheit dem unteren Laserstrahlenpaar zugeordnet sind.

Erfindungsgemäß ist vorgesehen, daß die Strahlteileroptik als lichtdurchlässiger Würfel der Kantenlänge A ausgebildet ist, der eine halbdurchlässige Spiegelfläche aufweist, die einen Diagonalschnitt darstellt, der von den Flächendiagonalen der Grund- und Deckfläche sowie je einer senkrechten Kante der Eintrittsfläche und der Rückseite des Würfels begrenzt ist, und daß auf der Rückseite des Würfels die positionsempfindlichen Photodetektoren angeordnet sind.

Eine andere Ausbildung der Strahlteileroptik sieht vor, daß die Strahlteileroptik aus zwei parallel zueinander angeordneten lichtdurchlässigen Quadern besteht, wobei jeder Quader halbdurchlässige Spiegelflächen aufweist und auf der Rückseite die positionsempfindlichen Photodetektoren angeordnet sind.

Nach der Erfindung ist es vorteilhaft, daß die Strahlteileroptik aus zwei parallel zueinander angeordneten lichtdurchlässigen Würfeln und einem in Richtung der Laserstrahlen hinter oder vor den Würfeln angeordneten weiteren Quader besteht und daß jeder Würfel halbdurchlässige Spiegelflächen aufweist, und auf der Rückseite die positionsempfindlichen Photodetektoren angeordnet sind.

Erfindungsgemäß ist auch vorgesehen, daß die beiden parallelen Laserstrahlen statt von zwei Lasern von einem Laser mit zugeordneter Strahlteileroptik erzeugbar sind.

Die mit der Erfindung erzielten Vorteile bestehen insbesondere darin, daß Spur- und Sturzwinkelmessungen von Kraftfahrzeugen wesentlich einfacher und schneller durchführbar sind, daß die Spur- und Sturzwinkelmessungen unabhängig von dem Ort sind, wo die erfindungsgemäße Meßeinheit im Strahlengang aufgestellt wird und daß durch geeignete Geometrie die Auflösung der Messungen erheblich zu steigern ist. Bei zwei Ausführungsbeispielen der Erfindung ergibt sich der Vorteil, daß durch die gleichzeitige Antastbarkeit aller vier Räder mit Meßeinheiten eine erhebliche Verkürzung der Meßzeiten in einem Fahrwerkstand erreicht wird.

Ausführungsbeispiele der Erfindung sind in der Zeichnung dargestellt und werden nachfolgend näher beschrieben. Es zeigen

Fig. 1   eine perspektivische Darstellung der erfindungsgemäßen Vorrichtung zur Bestimmung der Orientierung und Lage einer ebenen Platte,

Fig. 2   eine Darstellung des Strahlenganges eines Laserstrahles in der XY-Ebene, der unter einem Winkel $\alpha$ auf die Eintrittsfläche der Strahlteileroptik fällt,

Fig. 3   Darstellungen von Laserpunkten auf den Photodetektoren an der Rückseite der Strahlteileroptik und gegenüber den Lasern,

Fig. 4 und 5   die Draufsicht und eine Seitenansicht eines Fahrwerkstandes mit einer erfindungsgemäßen Vorrichtung für Spur- und Sturzwinkelmessungen eines Kraftfahrzeuges bei feststehenden Rädern (schematisch),

Fig. 6 und 7   die gleiche Darstellung wie in Fig. 4 und 5, jedoch für Spur- und Sturzwinkelmessungen bei drehenden Rädern,

Fig. 8 und 9   eine Teildraufsicht und eine Seitenansicht eines Fahrwerkstandes mit einer erfindungsgemäßen Vorrichtung zur Messung von Spur- und Sturzwinkeln gleichzeitig an allen vier Rädern eines Kraftfahrzeuges (schematisch),

Fig. 10   eine Seitenansicht eines Fahrwerkstandes mit einer anderen erfindungsgemäßen Vorrichtung zur Messung von Spur- und Sturzwinkeln gleichzeitig an allen vier Rädern eines Kraftfahrzeuges (schematisch),

Fig. 11   eine Weiterbildung der erfindungsgemäßen Vorrichtung aus Fig. 1 in perspektivischer Darstellung,

Fig. 12   eine perspektivische Darstellung einer Strahlteileroptik,

Fig. 13   eine perspektivische Darstellung einer anderen Strahlteileroptik und

Fig. 14   die Draufsicht auf einen Fahrwerkstand mit erfindungsgemäßer Vorrichtung zur Kalibrierung konventioneller Meßeinheiten zur Spur- und Sturzwinkelmessung.

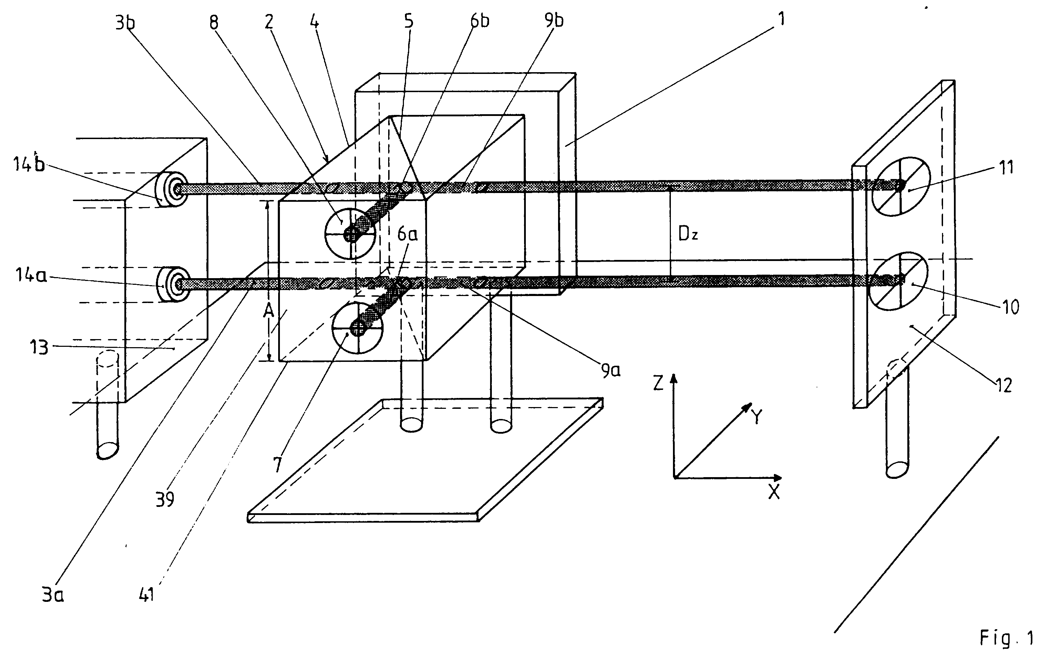

In Fig. 1 ist schematisch in perspektivischer Darstellung eine erfindungsgemäße Vorrichtung zur Bestimmung der Orientierung und Lage eines Objektes, das eine ebene Platte 1 darstellt, gezeigt. An einem vorderen Gestell 13 sind in der YZ-Ebene eines rechtwinkligen XYZ-Koordinatensystems senkrecht übereinander zwei, beispielsweise als Halbleiterlaser ausgebildete Laser 14a, 14b angeordnet, von denen zwei in einem Abstand $D_z$ in X-Richtung parallel verlaufende Laserstrahlen 3a, 3b ausgehen, die auf zwei in einer Ebene senkrecht zu ihnen angeordnete, als Quadrantendioden ausgebildete, positionsempfindliche erste Photodetektoren 10, 11 treffen. Die Photodetektoren 10, 11 sind an einem zweiten, hinteren Gestell 12 befestigt, das in fester Position im Abstand von einigen Metern gegenüber dem ersten vorderen Gestell 13 aufgestellt ist. Die parallelen Laserstrahlen 3a, 3b spannen eine als Bezugssystem dienende XZ-Referenzebene auf.

Wie aus Fig. 1 weiter hervorgeht, wird die ebene Platte 1, auf deren Rückseite in der Mitte eine erste Strahlteileroptik 2 befestigt ist, so zwischen den Lasern 14a, 14b und den zugeordneten ersten Photodetektoren 10, 11 längs der Laserstrahlen 3a, 3b aufgestellt, daß die Strahlteileroptik 2 in den Strahlengang der parallelen Laserstrahlen 3a, 3b zu stehen kommt. In dem dargestellten Ausführungsbeispiel von Fig. 1 ist die Strahlteileroptik 2 als lichtdurchlässiger Würfel 39 mit der Kantenlänge A ausgebildet, der mit einer Seitenfläche an der Rückseite der ebenen Platte 1 befestigt ist und eine halbdurchlässige Spiegelfläche 5 aufweist, die einen Diagonalschnitt durch den Würfel 39 darstellt und von den Flächendiagonalen der Grund- und Deckfläche sowie je einer senkrechten Kante der Eintrittsfläche 4 und der Rückseite 41 des Würfels 39 begrenzt wird. Die parallelen Laserstrahlen 3a, 3b treffen auf die als Eintrittsfläche bezeichnete Seitenfläche 4 der ersten Strahlteileroptik 2 und werden an der halbdurchlässigen Spiegelfläche 5 in durchgehende Strahlen 9a, 9b und von der ebenen Platte 1 weg reflektierte Strahlen 6a, 6b mit davon abweichender Richtung aufgespalten. Auf der Rückseite 41 der Strahlteileroptik 2 befinden sich im Abstand $D_z$ in einer Ebene übereinander angeordnet zwei, ebenfalls als Quadrantendioden ausgebildete weitere positionsempfindliche Photodetektoren 7, 8, auf die die reflektierten Strahlen 6a, 6b treffen.

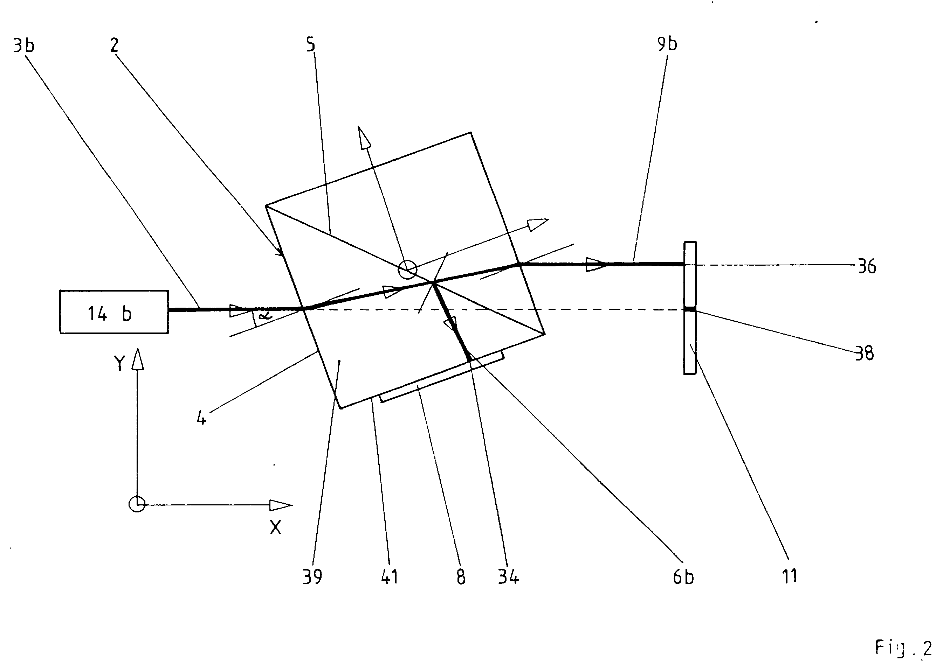

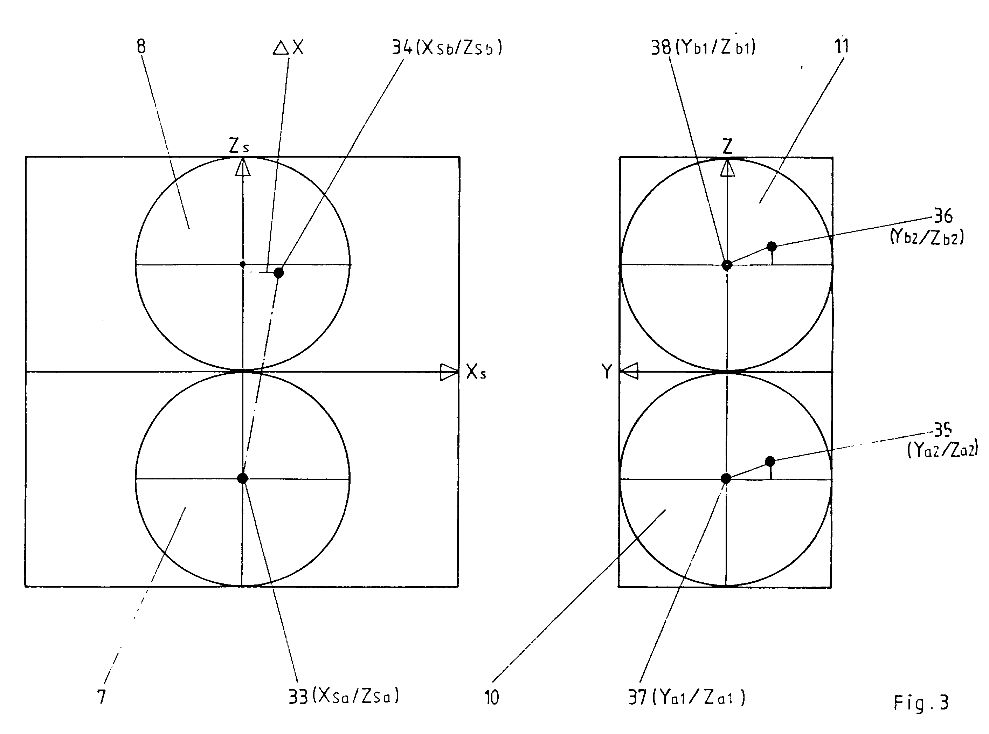

Bei senkrechter Anordnung der ersten Strahlteileroptik 2, d.h., wenn die parallelen Laserstrahlen 3a, 3b senkrecht auf die Eintrittsfläche 4 der Strahlteileroptik 2 treffen, wie in Fig. 1 gezeigt, erzeugen die durch sie durchgehenden Strahlen 9a, 9b nach Verlassen der Strahlteileroptik 2 die gleichen Laserpunkte 37, 38 (siehe Fig. 3) auf den ersten Photodetektoren 10, 11 des hinteren Gestells 12 wie die ungestörten Laserstrahlen 3a, 3b ohne erste Strahlteileroptik 2 im Strahlengang. Treffen dagegen die parallelen Laserstrahlen 3a, 3b nicht senkrecht auf die Eintrittsfläche 4 der ersten Strahlteileroptik 2, beispielsweise unter einem Winkel $\alpha$, wie bei dem in Fig. 2 dargestellten Strahlengang eines Laserstrahles 3b in der XY-Ebene, dann tritt infolge der Brechung des Laserstrahles 3b ein Versatz zwischen dem Laserstrahl 3b ohne Strahlteileroptik 2 (gestrichelte Linie) und mit Strahlteileroptik 2 auf, und der gebrochene Laserstrahl 9b erzeugt einen anderen Laserpunkt 36 auf dem Photodetektor 11 (Fig. 2).

Fig. 3 zeigt Darstellungen der Laserpunkte 33, 34 auf den weiteren Photodetektoren 7, 8 an der Rückseite 41 der ersten Strahlteileroptik 2, die von den reflektierten Strahlen 6a, 6b erzeugt werden sowie der Laserpunkte 35, 36, 37, 38 auf den ersten Photodetektoren 10, 11 an dem hinteren Gestell 12, wobei die Laserpunkte 37, 38 von den Laserstrahlen 3a, 3b ohne erste Strahlteileroptik 2 im Strahlengang und die Laserpunkte 35, 36 von den nicht senkrecht auf die erste Strahlteileroptik 2 auftreffenden und dadurch gebrochenen Laserstrahlen 9a, 9b stammen. Aus den gemessenen zwölf Koordinaten dieser sechs Laserpunkte lassen sich die Orientierung und Lage der ebenen Platte 1 in Bezug zu der Referenzebene berechnen, wobei die Lage der Referenzebene durch die ungestört, d.h. ohne erste Strahlteileroptik in dem Strahlengang der Laserstrahlen 3a, 3b, auf die ersten Photodetektoren 10, 11 treffenden Laserstrahlen 3a, 3b festgelegt ist. In nachfolgender Beschreibung zur Ermittlung des Spur- und Sturzwinkels von Kraftfahrzeugrädern 30 wird auf die Berechnung näher eingegangen.

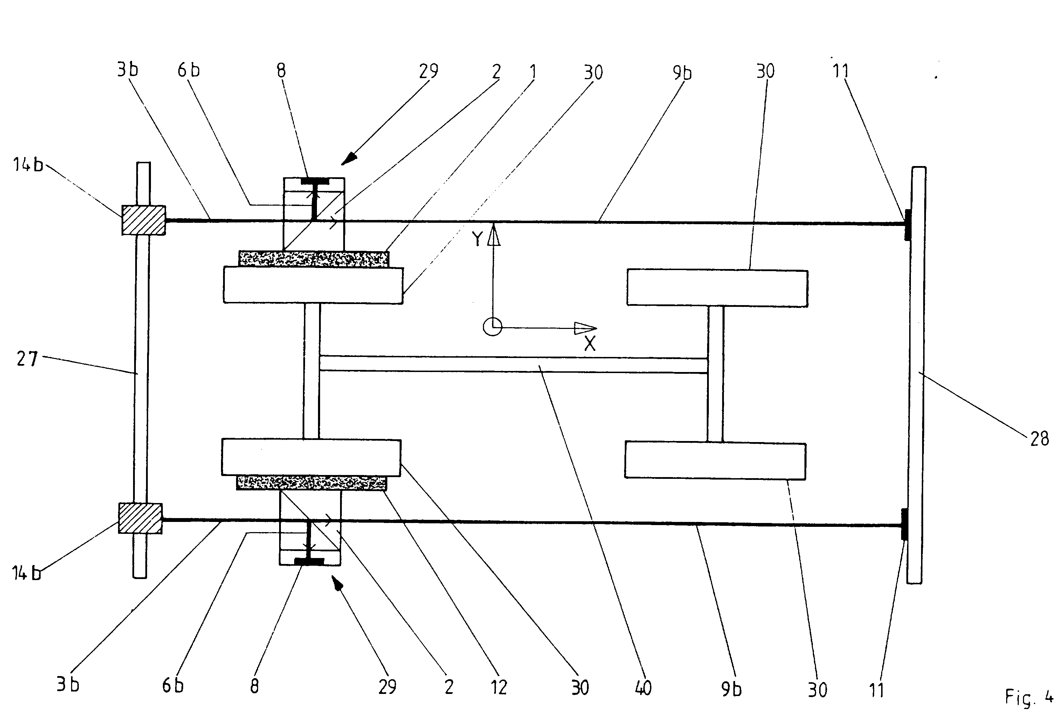

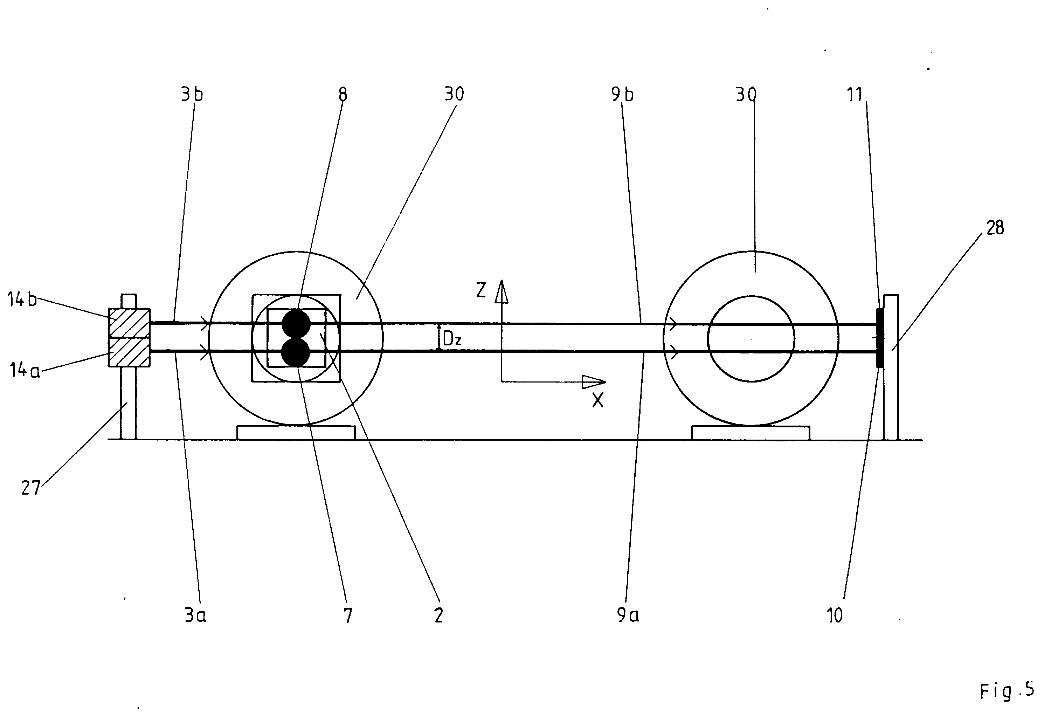

Fig. 4 und 5 zeigen in schematischer Darstellung die Draufsicht und eine Seitenansicht eines Fahrwerkstandes, in dem ein mit 40 bezeichnetes Kraftfahrzeug angedeutet ist, und an dessen Rädern 30 Spur- und Sturzwinkel unter Anwendung der in Fig. 1 dargestellten Vorrichtung ermittelt werden sollen. Dieser Fahrwerkstand ist prinzipiell aus einer vorderen Lasereinheit 27, einer zugeordneten hinteren Detektoreinheit 28 und zwei rechts- und linksseitigen Meßeinheiten 29 aufgebaut und erlaubt hochpräzise Spur- und Sturzwinkelmessungen sowie Vermessungen der Fahrwerksgeometrie ohne eine Kalibriereinrichtung, wie z.B. einen Einrichtmeister, zu benötigen. Am vorderen Ende des Fahrwerkstandes befindet sich die Lasereinheit 27 und am hinteren Ende die zugeordnete Detektoreinheit 28. Die Lasereinheit 27 trägt rechts und links im Abstand der Breite des Kraftfahrzeuges 40 jeweils zwei in der YZ-Ebene senkrecht übereinander angeordnete Laser 14a, 14b, deren parallele Laserstrahlen 3a, 3b in Höhe der Räder 30 rechts und links am gesamten Kraftfahrzeug 40 entlang laufen, auf jeder Fahrwerkseite eine XZ-Referenzebene aufspannen und auf die in gleicher Anordnung wie die Laser 14a, 14b senkrecht übereinander rechts und links hinter dem Kraftfahrzeug 40 in einer YZ-Ebene angeordnete positionsempfindliche erste Photodetektoren 10, 11 treffen. Sie erzeugen dabei, wie oben bereits erwähnt, die Laserpunkte 37, 38 in Fig. 3, deren Koordinaten als Referenz dienen.

Zur Bestimmung der Spurwinkel $\alpha$ und der Sturzwinkel $\beta$ der Räder 30 wird mit Hilfe einer mechanischen Zuführung, die in Fig. 4 und 5 nicht dargestellt ist, nacheinander an jedes Rad 30, beispielsweise an die Radfelge oder an den Reifenwulst, senkrecht zur jeweiligen Radachse die Meßeinheit 29, die aus der ebenen Platte 1 und der auf der dem Rad 30 abgewandten Seite der ebenen Platte 1 befestigten ersten Strahlteileroptik 2 besteht, so angetastet, daß die Strahlteileroptik 2 sich im Strahlengang der Laserstrahlen 3a, 3b befindet. Die ebene Platte 1 nimmt dabei die Lage und Orientierung, d.h. die Spur und den Sturz des zu vermessenden Rades 30 an. Die Laserstrahlen 3a, 3b, werden entsprechend ihres Einfallswinkels bei Eintritt in die erste Strahlteileroptik 2, wie bereits beschrieben, gebrochen und an der halbdurchlässigen Spiegelfläche 5 der Strahlteileroptik 2 in durchgehende und reflektierte Strahlen 9a, 9b, 6a, 6b aufgespalten. Die gebrochenen, durch die Strahlteileroptik 2 durchgehenden Strahlen 9a, 9b erzeugen auf den ersten Photodetektoren 10, 11 der hinteren Detektoreinheit 28 die Laserpunkte 35, 36, die reflektierten Laserstrahlen 6a, 6b auf den weiteren Photodetektoren 7, 8 auf der Rückseite 41 der ersten Strahlteileroptik 2 die Laserpunkte 33, 34 (siehe Fig. 3).

Aus den acht Koordinaten der vier Laserpunkte 35, 36, 37, 38 mit und ohne erster Strahlteileroptik 2 im Strahlengang, gemessen an den ersten Photodetektoren 10, 11 der hinteren Detektoreinheit 28 sowie aus den vier Koordinaten der Laserpunkte 33, 34, gemessen an den weiteren Photodetektoren 7, 8 auf der Rückseite 41 der ersten Strahlteileroptik 2, lassen sich die fünf Freiheitsgrade der Strahlteileroptik 2 bzw. der ebenen Platte 1 - wobei die ebene Platte 1 nur in der X-Richtung unbestimmt bleibt - und aus diesen der Spurwinkel $\alpha$, der Sturzwinkel $\beta$ und der Abstand $d_y$ der Mitte der ersten Strahlteileroptik 2 von der Referenzebene bestimmen.

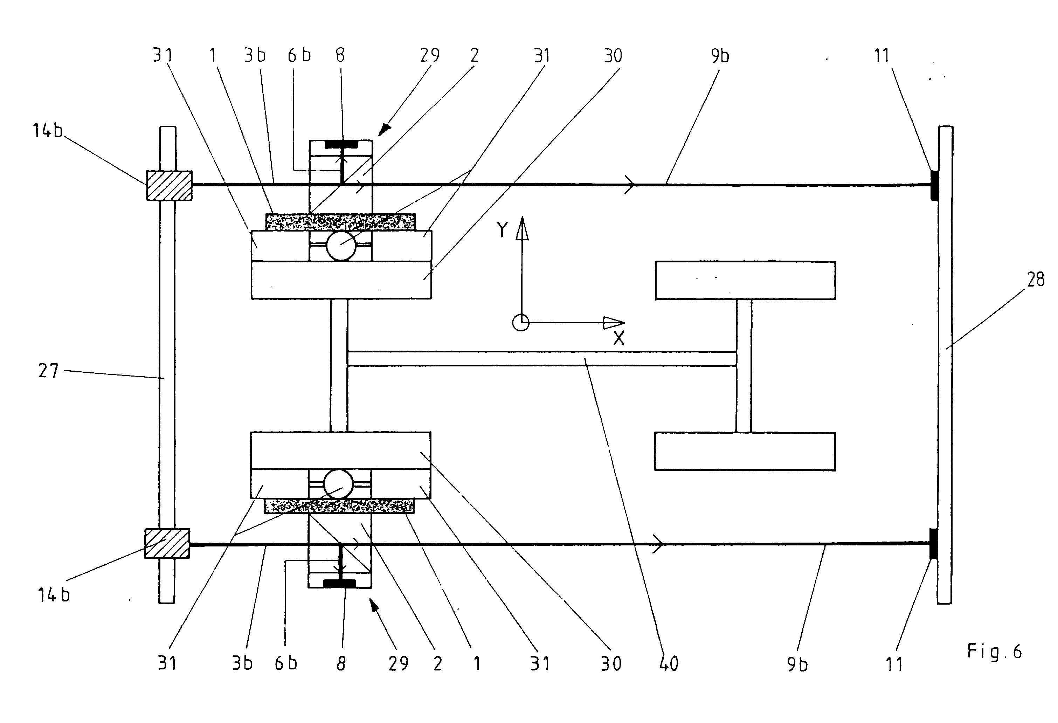

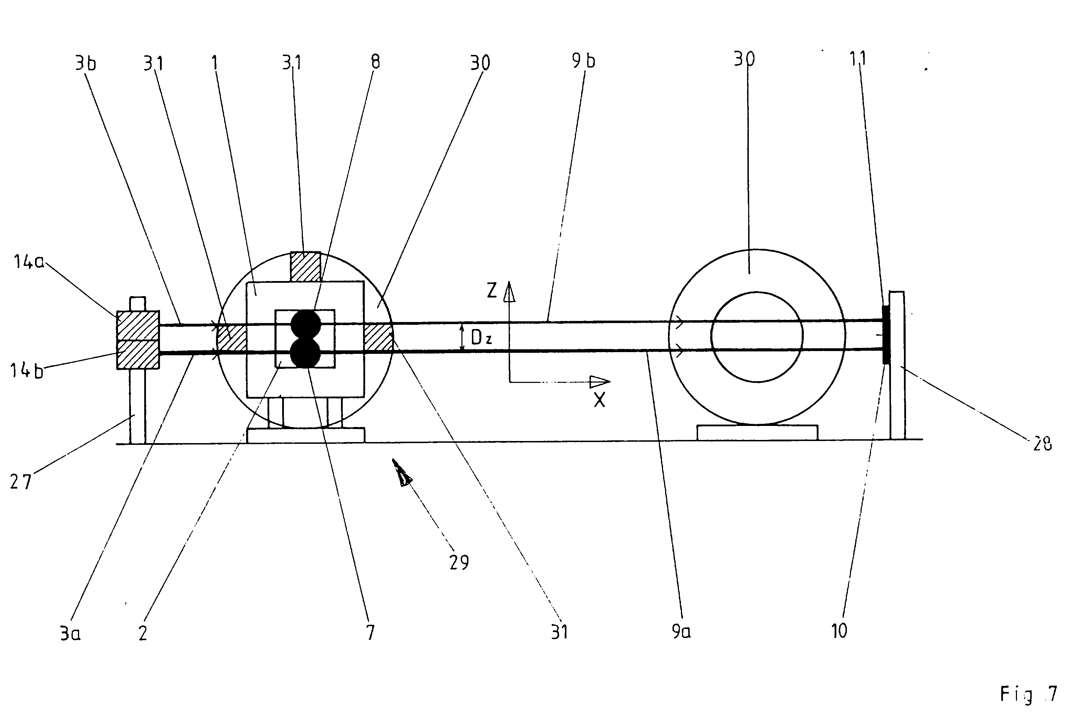

Während bei der in Fig. 4 und 5 dargestellten Ausbildung der erfindungsgemäßen Vorrichtung die Messungen von Spur- und Sturzwinkeln $\alpha$, $\beta$ bei feststehenden Rädern 30 erfolgt, wobei die ebene Platte 1 unmittelbar mit den entsprechenden Rädern 30 in Berührung gebracht wird, zeigen die gleichen Darstellungen in Fig. 6 und 7 Meßeinheiten 29 an den beiden Vorderrädern 30, bei denen auf der dem Rad 30 zugewandten Seite an der ebenen Platte 1 drei Rollen 31 angeordnet sind. Die Rollen 31 tasten den Reifenwulst der Räder 30 seitlich an, so daß auch bei drehendem Rad 30 der zeitliche Verlauf der Orientierung und Lage der ebenen Platte 1 gemessen werden kann. Dieser zeitliche Verlauf wird als zeitlich sich ändernde Position der jeweiligen Laserpunkte auf den beiden ersten Photodetektoren 10, 11 der hinteren Detektoreinheit 28 und auf den weiteren Photodetektoren 7, 8 der Meßeinheit 29 sichtbar.

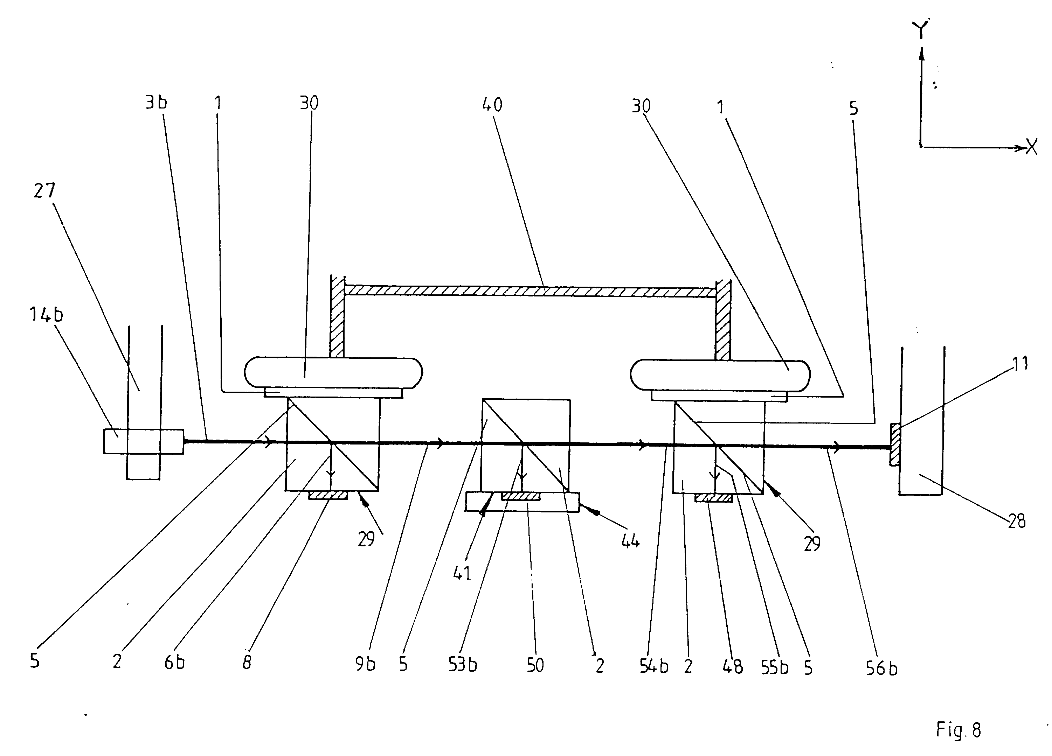

Bei den bisherigen Ausführungsbeispielen zur Bestimmung der Spur- und Sturzwinkel $\alpha$, $\beta$ werden die Räder 30 eines Kraftfahrzeuges 40 nacheinander von der Meßeinheit 29 angetastet und vermessen; diese Vorgehensweise ist sehr zeitaufwendig. Nachfolgend werden erfindungsgemäße Ausführungsbeispiele beschrieben und in den Fig. 8 bis 10 gezeigt, die eine gleichzeitige Vermessung aller vier Räder 30 eines Kraftfahrzeuges 40 gestatten, wobei für jedes Rad 30 eine eigene Meßeinheit 29 vorgesehen ist.

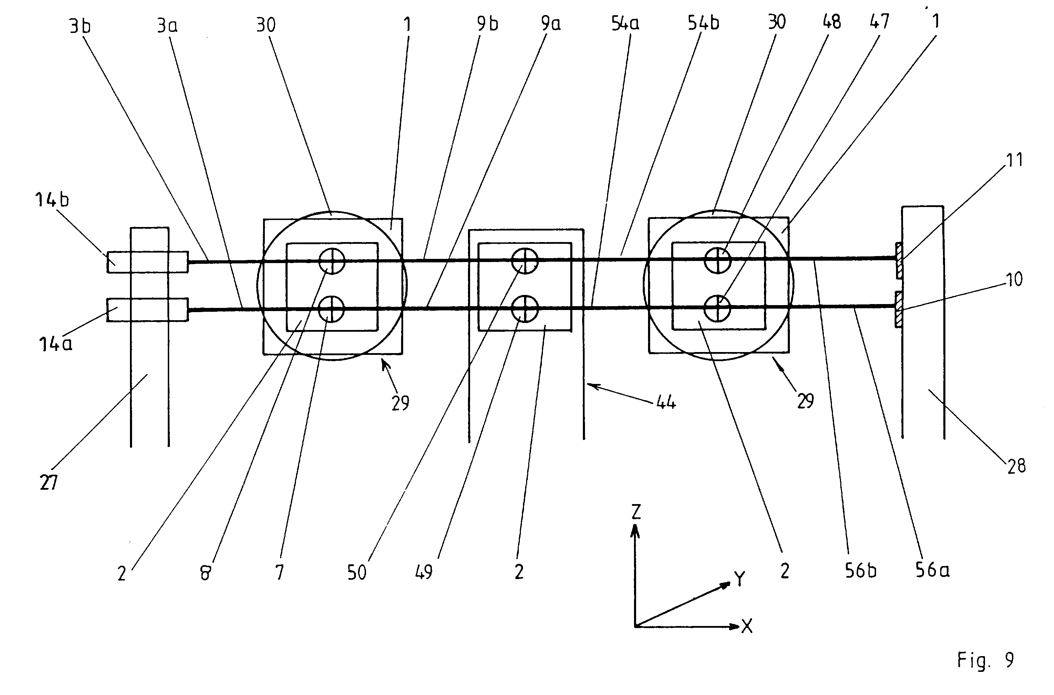

Fig. 8 und 9 zeigen in schematischer Darstellung eine halbseitige Draufsicht und eine Seitenansicht eines Fahrwerkstandes mit erfindungsgemäßer Vorrichtung zur Bestimmung der Spur- und Sturzwinkel $\alpha$, $\beta$ gleichzeitig an allen Rädern 30. Gegenüber den Fig. 4 bis 7 weist jedes Rad 30 der erfindungsgemäßen Vorrichtung in Fig. 8 und 9 eine Meßeinheit 29 und zusätzlich eine weitere mittlere Detektoreinheit 44 auf, die zwischen Vorder- und Hinterrad 30 auf jeder Seite des Kraftfahrzeuges 40 in den Strahlengang der von den Lasern 14a, 14b der Lasereinheit 27 ausgesandten Laserstrahlen 3a, 3b angeordnet werden kann. Die Detektoreinheit 44 besteht aus einer bereits bekannten weiteren Strahlteileroptik 2 mit zwei senkrecht übereinander angeordneten weiteren Photodetektoren 49, 50 auf der Rückseite 41. Die mittlere Detektoreinheit 44 hat die Aufgabe, einerseits die von der vorderen Meßeinheit 29 am Vorderrad 30 kommenden Laserstrahlen 9a, 9b an der halbdurchlässigen Spiegelfläche 5 ihrer Strahlteileroptik 2 aufzuspalten und die reflektierten Strahlen 53a, 53b an den weiteren Photodetektoren 49, 50 zu registrieren und andererseits die durch sie durchgehenden Strahlen 54a, 54b der hinteren Strahlteileroptik 2 der Meßeinheit 29 am Hinterrad 30 des Kraftfahrzeuges 40 zuzuführen.

Zur Bestimmung der Spur- und Sturzwinkel $\alpha$, $\beta$ der Räder 30 werden vorab in bekannter Weise die Koordinaten der von den Lasern 14a, 14b ausgesandten ungestörten Laserstrahlen 3a, 3b ohne vordere und hintere Meßeinheit 29 im Strahlengang an den ersten Photodetektoren 10, 11 der hinteren Detektoreinheit 28 sowie an den Photodetektoren 49, 50 der mittleren Detektoreinheit 44 zwischen Vorder- und Hinterrad 30 ermittelt und als Referenz benutzt. Danach wird das Vorder- und Hinterrad 30 gleichzeitig von einer vorderen und hinteren Meßeinheit 29 angetastet, wie in Fig. 8 und 9 gezeigt, wobei die Laserstrahlen 3a, 3b nacheinander die erste Strahlteileroptik 2 der vorderen Meßeinheit 29 am Vorderrad 30, die zweite Strahlteileroptik 2 der mittleren Detektoreinheit 44 zwischen Vorder- und Hinterrad 30 sowie die dritte Strahlteileroptik 2 der hinteren Meßeinheit 29 am Hinterrad 30 durchlaufen. In der ersten Strahlteileroptik 2 der vorderen Meßeinheit 29 werden die Laserstrahlen 3a, 3b wie bereits beschrieben in reflektierte und durchgehende Strahlen 6a, 6b und 9a, 9b aufgespalten. Die reflektierten Strahlen 6a, 6b werden auf den Photodetektoren 7, 8 auf der Rückseite 41 der ersten Strahlteileroptik 2 zur Anzeige gebracht, während die durchgehenden Laserstrahlen 9a, 9b in der zweiten Strahlteileroptik 2 der mittleren Detektoreinheit 44 wiederum in reflektierte und durchgehende Strahlen 53a, 53b, 54a, 54b aufgeteilt werden. Die durch Reflexion in der zweiten Strahlteileroptik 2 der mittleren Detektoreinheit 44 aus dem Strahlengang ausgeblendeten Laserstrahlen 53a, 53b werden auf den weiteren Photodetektoren 49, 50 der mittleren Detektoreinheit 44 angezeigt und gemeinsam mit den reflektierten Strahlen 6a, 6b zur Bestimmung von Spur- und Sturzwinkeln $\alpha$, $\beta$ der Vorderräder 30 herangezogen, indem die Koordinaten der auf die vorderen Photodetektoren 7, 8 sowie die mittleren Photodetektoren 49, 50 treffenden Laserstrahlen 6a, 6b, 53a, 53b ermittelt und einem Rechner zugeführt werden.

Mit Hilfe der durch die zweite Strahlteileroptik 2 der mittleren Detektoreinheit 44 durchgehenden Laserstrahlen 54a, 54b, die in der dritten Strahlteileroptik 2 der hinteren Meßeinheit 29 am Hinterrad 30 in reflektierte und durchgehende Strahlen 55a, 55b, 56a, 56b aufgespalten werden, lassen sich in gleicher Weise aus den Koordinaten der auf die hinteren Photodetektoren 47, 48 auf der Rückseite 41 der dritten Strahlteileroptik 2 sowie der ersten Photodetektoren 10, 11 an der hinteren Detektoreinheit 28 auftreffenden Laserstrahlen 55a, 55b, 56a, 56b Spur- und Sturzwinkel $\alpha$, $\beta$ der Hinterräder 30 ermitteln. In die Rechnungen zur Bestimmung der Spur- und Sturzwinkel $\alpha$, $\beta$ der Hinterräder 30 gehen die Ergebnisse der Spur- und Sturzwinkelmessungen des auf der gleichen Fahrzeugseite befindlichen Vorderrades 30 ein, da die der hinteren Meßeinheit 29 am Hinterrad 30 zugeführten Laserstrahlen 54a, 54b bereits durch die Spur- und Sturzwinkel $\alpha$, $\beta$ des Vorderrades 30 beeinflußt sind.

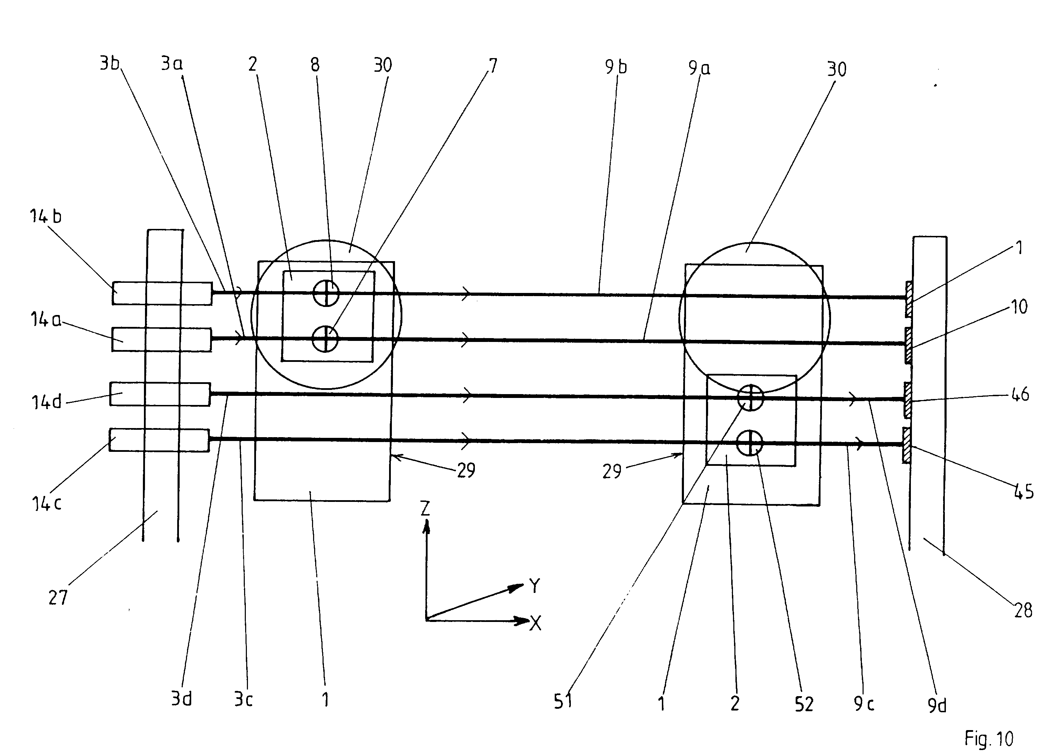

In Fig. 10 ist eine schematische Seitenansicht einer weiteren erfindungsgemäßen Vorrichtung zur Bestimmung der Spur- und Sturzwinkel $\alpha$, $\beta$ gleichzeitig an allen vier Rädern 30 eines Kraftfahrzeuges 40 dargestellt. Wie diese Figur zeigt, ist die Zahl der an der vorderen Lasereinheit 27 senkrecht übereinander angeordneten Lasern von zwei auf vier erhöht 14a, 14b, 14c, 14d. Dementsprechend befinden sich an der hinteren Detektoreinheit 28 ebenfalls vier zugeordnete Photodetektoren 11, 12, 45, 46. Außerdem ist die ebene Platte 1 der beiden Meßeinheiten 29 an Vorder- und Hinterrad 30 so ausgebildet, daß beim Antasten der ebenen Platte 1 der vorderen Meßeinheit 29 an das Vorderrad 30 die erste Strahlteileroptik 2 der vorderen Meßeinheit 29 in den Strahlengang des oberen Laserstrahlenpaares 3a, 3b und beim Antasten der ebenen Platte 1 der hinteren Meßeinheit 29 an das Hinterrad 30 die zweite Strahlteileroptik 2 der Meßeinheit 29 am Hinterrad 30 in den Strahlengang des unteren Laserstrahlenpaares 3c, 3d gelangt. Zur Bestimmung der Spur- und Sturzwinkel $\alpha$, $\beta$ stehen für jedes Rad 30 ein Laserstrahlenpaar, eine Strahlteileroptik und vier Photodetektoren zur Verfügung, und zwar beispielsweise für das Vorderrad 30, das Laserstrahlenpaar 3a, 3b, die Photodetektoren 7, 8 auf der Rückseite 41 der zugehörigen ersten Strahlteileroptik 2 am Vorderrad 30, an denen die Koordinaten der reflektierten Strahlen 6a, 6b ermittelt werden sowie die ersten Photodetektoren 10, 11 an der hinteren Detektoreinheit 28, an denen die Koordinaten der durchgehenden Strahlen 9a, 9b bzw. die Koordinaten der Laserstrahlen 3a, 3b ohne vordere Meßeinheit 29 im Strahlengang ermittelt werden. Entsprechend sind dem Hinterrad 30 das untere Laserstrahlenpaar 3c, 3d, die Photodetektoren 51, 52 auf der Rückseite 41 der zweiten Strahlteileroptik 2 am Hinterrad 30 und die unteren Photodetektoren 45, 46 an der hinteren Detektoreinheit 28 zugeordnet, an denen die erforderlichen Koordinaten für die Spur- und Sturzwinkelmessungen der Hinterräder 30 erfaßt werden.

Das Auslesen der Intensitätsschwerpunkte der als Beispiel in Fig. 3 dargestellten Laserpunkte 33, 34, 35, 36 auf den Photodetektoren 7, 8 und 10, 11 erfolgt synchron, so daß Schwankungen der Intensitätsschwerpunkte aufgrund der Dichteschwankungen der Luft und aufgrund von Instabilitäten der Laser 14a, 14b weitgehend eliminiert werden. Die Koordinaten der Laserpunkte werden an einen Rechner weitergegeben, der mit Hilfe geeigneter Algorithmen den Spur- und Sturzwinkel $\alpha$, $\beta$ sowie den Abstand $d_y$ des Mittelpunktes der Strahlteileroptik von der Referenzebene berechnet.

Der Spurwinkel $\alpha$ entspricht dem horizontalen Einfallswinkel der Laserstrahlen 3a, 3b auf die Strahlteileroptik 2 und wird aus den Koordinaten der Laserpunkte 35, 36 mit Strahlteileroptik 2 und 37, 38 ohne Strahlteileroptik im Strahlengang auf den ersten Photodetektoren 10, 11 der hinteren Detektoreinheit 28 berechnet, während der Sturzwinkel $\beta$ dem Drehwinkel der Strahlteileroptik 2 um die Richtung eines einfallenden Laserstrahles entspricht und aus den Koordinaten der Laserpunkte 33, 34 auf den weiteren Photodetektoren 7, 8 auf der Rückseite 41 der Strahlteileroptik 2 ermittelt wird.

Für zwei Spezialfälle lassen sich $\alpha$, $\beta$ besonders einfach berechnen.

1. Fall: Sturzwinkel $\beta$ = 0

Die unter dem Spurwinkel $\alpha$ in die Strahlteileroptik 2 einfallenden Laserstrahlen 3a, 3b werden um die Strecke

$$\Delta = Y_{b2} - Y_{b1} = Y_{a2} - Y_{a1} = A \cdot \sin\alpha \cdot \left[ 1 - \frac{\cos\alpha}{\sqrt{n^2 - (\sin\alpha)^2}} \right]$$

(siehe Fig. 3) in Y-Richtung auf den Photodetektoren 10, 11 der Detektoreinheit 28 verschoben, wobei A die Kantenlänge der Strahlteileroptik 2 und n der Brechungsindex sind. Für kleine Spurwinkel $\alpha$ erhält man:

$$\alpha = \frac{n}{n-1} \cdot \frac{\Delta}{A} \cdot \frac{180^{\circ}}{\pi}$$

2. Fall: Spurwinkel $\alpha = 0$

Der Sturzwinkel $\beta$ wird aus den Koordinaten der Laserpunkte 33, 34 auf den Photodetektoren 7, 8 berechnet (siehe Fig. 3):

$$\Delta X = X_{sb} - X_{sa} = D_z \cdot \sin\beta$$

Für kleine Sturzwinkel $\beta$ erhält man:

$$\beta = \frac{AX}{D_z} \cdot \frac{180^{\circ}}{\pi}$$

wobei $D_z$ der Abstand zwischen den Laserstrahlen 3a, 3b ist.

Die Auflösung für den Spurwinkel $\alpha$, den Sturzwinkel $\beta$ und den Abstand $d_y$ des Mittelpunktes der Strahlteileroptik 2 von der Referenzebene ist durch die Auflösung des Systems Photodetektor-Laserstrahl, durch den Brechungsindex n und die Länge der Strahlteileroptik 2 sowie durch den Abstand $D_z$ der parallelen Laserstrahlen 3a, 3b festgelegt. Die Auflösung für den Spurwinkel $\alpha$ wird umso besser, je größer die Länge A der Strahlteileroptik 2 ist; die Auflösung für den Sturzwinkel $\beta$ wächst mit dem Abstand $D_z$ der beiden Laserstrahlen 3a, 3b bzw. der Laserstahlenpaare 3a, 3b und 3c, 3d. Außerdem zeigt sich, daß die Winkelauflösung nicht von den X-Koordinaten abhängt.

Die Grundvoraussetzung für eine hohe Meßgenauigkeit ist die möglichst exakte Realisierung der Parallelität der rechts- und linksseitig am gesamten Kraftfahrzeug 40 entlang laufenden Laserstrahlen 3a, 3b bzw. 3c, 3d.

Den bisher beschriebenen Ausführungsbeispielen zur Bestimmung der Spur- und Sturzwinkel von Rädern 30 und des Dackellaufs eines Kraftfahrzeuges 40, die in den Fig. 4 bis 10 dargestellt und anhand dieser Figuren beschrieben sind, liegen das erfindungsgemäße Verfahren des Anspruchs 1 und die zugehörige erfindungsgemäße Vorrichtung in Fig. 1 zugrunde. Demzufolge wird in einem ersten Meßvorgang die Referenzebene kalibriert, indem die von den Lasern ausgesandten Laserstrahlen zuerst ungestört auf die zugeordneten, positionsempfindlichen Photodetektoren treffen und ihre Auftreffpunktkoordinaten bestimmt werden. In einem folgenden, weiteren Meßvorgang erfolgt die Vermessung der Lage und Orientierung des Objekts, d.h. der Fahrzeugräder, wobei die lageabhängige Strahlteileroptik in den Strahlengang der Laserstrahlen gelangt und die neuen Auftreffpunktkoordinaten an den zugeordneten Photodetektoren gemessen werden.

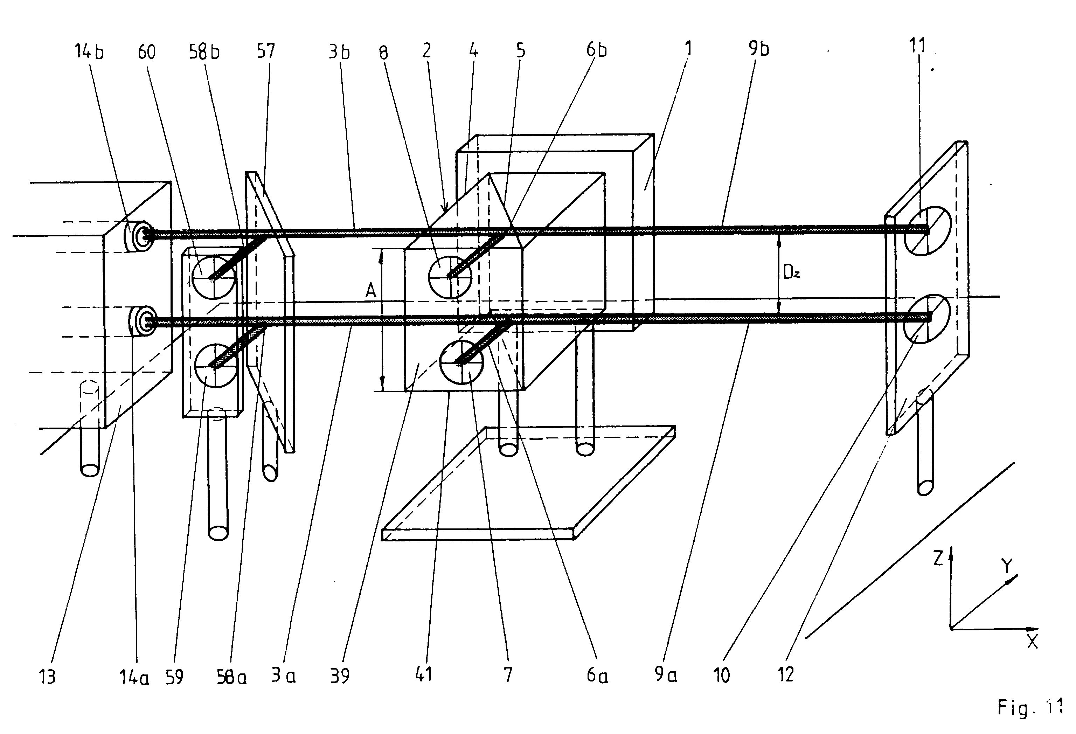

In Fig. 11 ist eine vorteilhafte Weiterbildung der erfindungsgemäßen Vorrichtung aus Fig. 1 zur Bestimmung der Lage und Orientierung eines Objekts in perspektivischer Darstellung gezeigt. Eine zusätzliche Strahlteileroptik 57, die als halbdurchlässiger Spiegel dargestellt ist, ist dauerhaft in fester Anordnung zu den Lasern 14a, 14b in den Strahlengang der Laserstrahlen 3a, 3b vor der ersten von der Lage des Objekts abhängigen Strahlteileroptik 2 angeordnet. Die durch die zusätzliche Strahlteileroptik 57 durchgehenden Strahlen 3a, 3b treffen auf die erste Strahlteileroptik 2 und verlaufen dann in der aus Fig. 1 bekannten und dort beschriebenen Art und Weise, während die in der zusätzlichen Strahlteileroptik 57 reflektierten Strahlen 58a, 58b auf zwei zusätzliche positionsempfindliche Photodetektoren 59, 60 treffen, die in fester Anordnung an der zusätzlichen Strahlteileroptik 57 positioniert sind. Die Auftreffpunktkoordinaten der reflektierten Strahlen 58a, 58b auf den zusätzlichen Photodetektoren 59, 60 werden anstelle der gemäß Fig. 1 ermittelten Koordinatenpaare der ungestört auf die ersten Photodetektoren 10, 11 treffenden Laserstrahlen 3a, 3b zur On-Line-Kalibrierung der Referenzebene benutzt. Dadurch wird es möglich, daß während der Vermessung der Lage und Orientierung des Objekts im gleichen Meßvorgang auch die Kalibrierung der Referenzebene durchführbar ist. Neben der Einsparung eines zweiten Meßvorganges ergibt sich der weitere Vorteil, daß mögliche Schwankungen der Laser sich in gleicher Weise auf die Kalibrierung der Referenzebene und die Vermessung des Objekts auswirken und entsprechend korrigiert werden können.

In vorteilhafter Weise werden die in den Fig. 4 bis 10 dargestellten Fahrwerkstände zur Bestimmung der Spur- und Sturzwinkel der Räder und der Fahrwerksgeometrie von Kraftfahrzeugen auf der Grundlage der in Fig. 11 gezeigten Vorrichtung mit zusätzlichem, festpositionierten Strahlteiler 57 und zugeordneten positionsempfindlichen Photodetektoren 59, 60 ausgestattet. Dadurch wird die Bestimmung der Spur- und Sturzwinkel und des Dackellaufs erheblich verkürzt. Auf zeichnerische Darstellungen von derart ausgerüsteten Fahrwerkständen wurde wegen der ausführlichen Beschreibung anhand von Fig. 11 verzichtet.

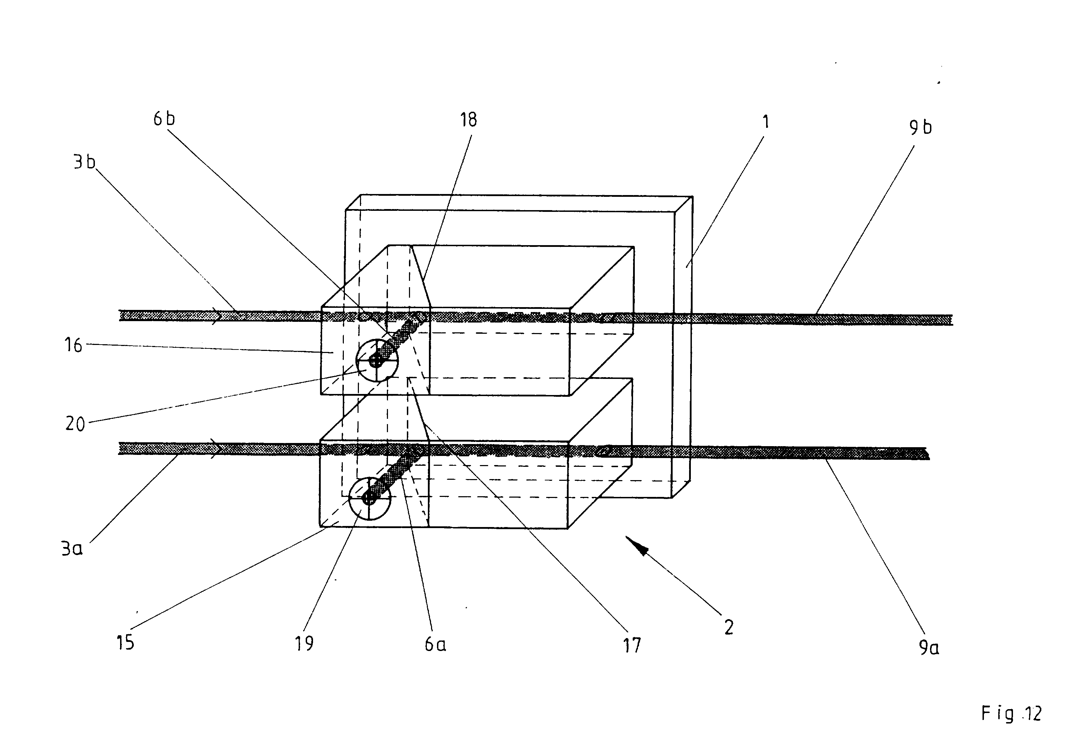

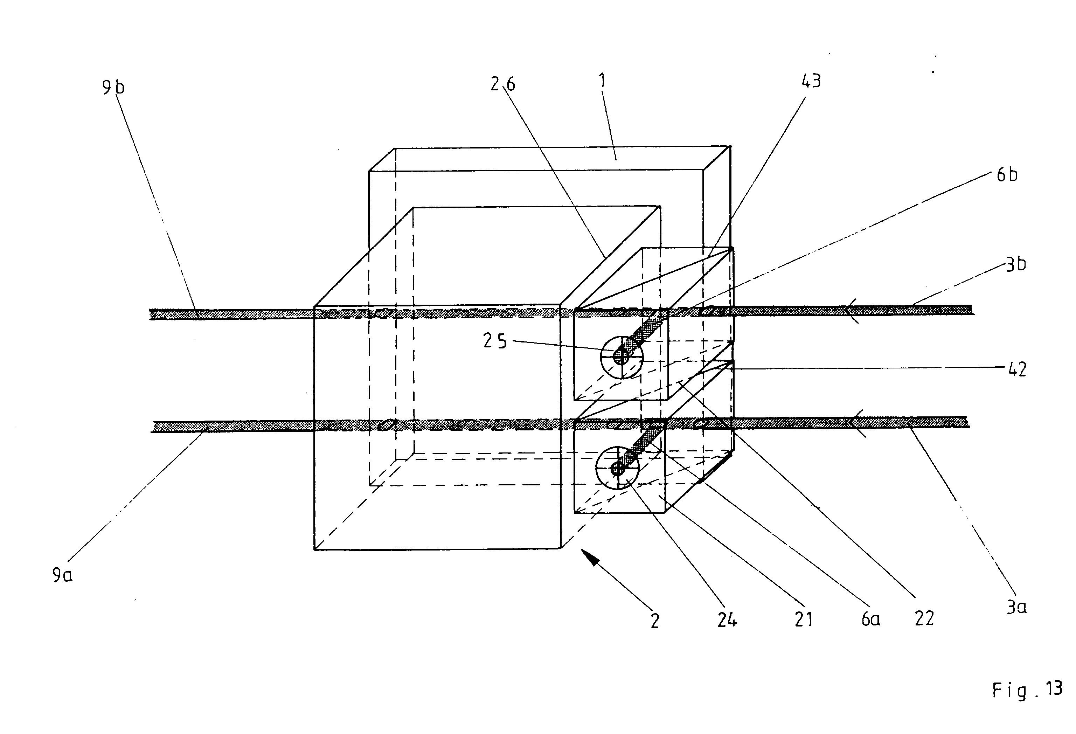

Aufbauend auf den physikalischen Zusammenhängen über die Auflösung der Meßergebnisse sind in den Figuren 12 und 13 weitere, zweckmäßige und vorteilhafte Ausbildungsformen der Strahlteileroptik 2 dargestellt, die im wesentlichen dazu dienen, die optische Weglänge der Laserstrahlen in der Strahlteileroptik 2 zu vergrößern und/oder einen größeren Abstand $D_z$ der parallelen Laserstrahlen 3a, 3b zu gewährleisten.

Nach Fig. 12 besteht die Strahlteileroptik 2 aus zwei lichtdurchlässigen Quadern 15, 16 mit geeigneten halbdurchlässigen Spiegelflächen 17, 18. Die Quader 15, 16 sind senkrecht übereinander angeordnet, parallel zueinander orientiert und in bekannter Weise an der Rückseite der ebenen Platte 1 befestigt. In jeden Quader 15, 16 tritt ein Laserstrahl 3a, 3b ein, deren an den halbdurchlässigen Spiegelflächen 17, 18 von der ebenen Platte 1 weg reflektierten Strahlen 6a, 6b auf die positionsempfindlichen Photodetektoren 19, 20 treffen, während die durchgehenden Laserstrahlen 9a, 9b der nicht in der Figur dargestellten hinteren Detektoreinheit 28 zugeführt werden.

In Fig. 13 ist eine andere Strahlteileroptik 2, die aus zwei in der von den Laserstrahlen 3a, 3b aufgespannten Referenzebenen senkrecht übereinander angeordnete, lichtdurchlässige Würfel 21, 22 und einem in Richtung der Laserstrahlen 3a, 3b nachgeschalteten, lichtdurchlässigen weiteren Quader 23 besteht, wobei die drei optischen Elemente in bekannter Lage und Orientierung auf der Rückseite der ebenen Platte 1 befestigt sind. Die Würfel 21, 22 weisen im Innern halbdurchlässige Spiegelflächen 42, 43 auf, an denen in bereits beschriebener Weise die in die Würfel 21, 22 getrennt einfallenden Laserstrahlen 3a, 3b in durch die Würfel 21, 22 durchgehende 9a, 9b und von der ebenen Platte 1 weg reflektierte Strahlen 6a, 6b mit davon abweichender Richtung aufgespalten werden. Die reflektierten Strahlen 6a, 6b treffen auf die Photodetektoren 24, 25 an der Rückseite 41 der Würfel 21, 22, während die durchgehenden Laserstrahlen 9a, 9b nach Verlassen der Würfel 21, 22 über die Seitenfläche 26 in den weiteren Quader 23 eintreten und diesen längs der ebenen Platte 1 durchlaufen.

Neben der beschriebenen Messung von Spur- und Sturzwinkeln von Rädern 30 sowie der gesamten Fahrwerksgeometrie lassen sich mit den erfindungsgemäßen Verfahren auch konventionelle Meßeinheiten 32 für die Spur- und Sturzwinkelmessung eines Fahrwerkstandes kalibrieren. Die erfindungsgemäße, optische Meßeinheit 29, bestehend aus der ebenen Platte 1 und der daran befestigten Strahlteileroptik 2 mit Photodetektoren 7, 8 dient dabei als Kalibriereinheit.

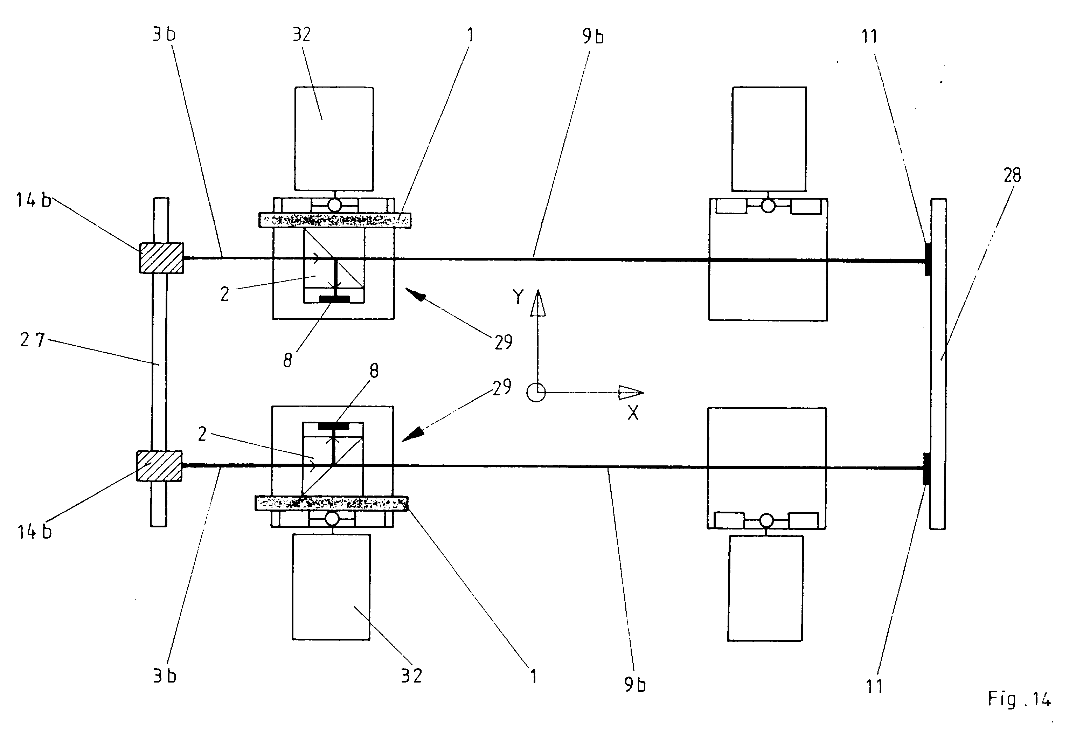

In Fig. 14 ist ein Fahrwerkstand, wie bereits aus Fig. 4 bekannt, ohne das Kraftfahrzeug 40 in Draufsicht schematisch dargestellt. Zur Kalibrierung der konventionellen Meßeinheit 32 wird die optische Meßeinheit 29 so in den Fahrwerkstand zwischen vorderer Lasereinheit 27 und Detektoreinheit 28 angeordnet, daß sich die erste Strahlteileroptik 2 im Strahlengang der parallelen Laserstrahlen 3a, 3b befinden. Dann wird die konventionelle Meßeinheit 32, die sich gegenüber der optischen Meßeinheit 29 auf der der optischen Meßeinheit 29 abgewandten Seite der ebenen Platte 1 befindet, an die ebene Platte 1 angetastet und Spur- und Sturzwinkel der ebenen Platte 1 sowohl von der erfindungsgemäßen, optischen Meßeinheit 29 über die Koordinaten der Laserpunkte auf den ersten Photodetektoren 10, 11 und den weiteren Photodetektoren 7, 8 als auch von der zu kalibrierenden, konventionellen Meßeinheit 32 erfaßt und miteinander verglichen.

## Patentansprüche

1.  Verfahren zur Bestimmung der Orientierung und Lage eines Objekts, bei dem zwei parallel zueinander verlaufende, eine Referenzebene aufspannende Laserstrahlen

    -   das eine Mal ungestört auf zwei feststehende senkrecht zu den Laserstrahlen angeordnete erste positionsempfindliche Photodetektoren treffen und zwei Auftreffpunktkoordinatenpaare für die Laserstrahlen über ihre Intensitätsschwerpunkte bestimmt werden,

    -   das andere Mal in den Strahlengang der Laserstrahlen eine Strahlteileroptik eingebracht wird, deren Lage vom Objekt abhängt und innerhalb derer die Laserstrahlen in durch sie durchgehende Strahlen und in reflektierte Strahlen mit davon abweichender Richtung aufgespalten werden,

    -   die durchgehenden Strahlen auf die ersten posisitionsempfindlichen Photodetektoren treffen und ihre zwei Auftreffpunktkoordinatenpaare ebenfalls bestimmt werden,

    -   die reflektierten Strahlen auf zwei weitere an der ersten Strahlteileroptik angeordnete positionsempfindliche Photodetektoren treffen und ihre zwei Auftreffpunktkoordinatenpaare ebenfalls bestimmt werden, und

    -   die Orientierung und Lage des Objekts aus den vier gemessenen Koordinatenpaaren der zwei auf die ersten Photodetektoren jeweils mit und ohne Strahlteileroptik auftreffenden Laserstrahlen und aus den zwei gemessenen Koordinatenpaaren der reflektierten, auf die weiteren Photodetektoren treffenden Laserstrahlen in Bezug zu der Referenzebene, die durch die ungestört auf die ersten Photodetektoren treffenden Laserstrahlen festgelegt ist, berechnet werden.

2.  Verfahren nach Anspruch 1, **dadurch gekennzeichnet**, daß eine zusätzliche, feststehende Strahlteileroptik dauerhaft in den Strahlengang der Laserstrahlen zwischen die Laser und der ersten Strahlteileroptik positioniert wird, die die Laserstrahlen in durch sie durchgehende Strahlen und in reflektierte Strahlen mit davon abweichender Richtung aufspalten, daß die reflektierten Strahlen auf zwei zusätzliche, feststehende positionsempfindliche Photodetektoren treffen und ihre zwei Auftreffpunktkoordinatenpaare bestimmt werden, daß die durchgehenden Strahlen auf die erste Strahlteileroptik treffen, deren Lage von dem Objekt abhängt, und in durch sie durchgehende auf die ersten Photodetektoren treffende Strahlen und in reflektierte auf die weiteren an der ersten Strahlteileroptik angeordnete Photodetektoren treffende Strahlen aufgespalten werden, daß die Orientierung und Lage des Objekts aus den zwei gemessenen Koordinatenpaaren der auf die ersten Photodetektoren treffenden Laserstrahlen, aus den zwei gemessenen Koordinatenpaaren der auf die an der ersten Strahlteileroptik angeordneten Photodetektoren reflektierten Strahlen und aus den zwei gemessenen Koordinatenpaaren der auf die zusätzlichen feststehenden Photodetektoren reflektierten Strahlen berechnet werden, wobei die letztgenannten Koordinatenpaare anstelle der Koordinatenpaare der ungestört auf die ersten Photodetektoren treffenden Laserstrahlen zur On-Line-Kalibrierung der Referenzebene benutzt werden.

3.  Verfahren nach Anspruch 1 oder 2, **dadurch gekennzeichnet**, daß zur Spur- und Sturzwinkelbestimmung der Räder eines Kraftfahrzeugs die parallelen Laserstrahlen senkrecht übereinander in Höhe der Räder am gesamten Fahrzeug entlanglaufen, daß ein Rad jeweils senkrecht zur Radachse an seinem Umfang außen von einer ebenen Platte, auf deren dem Rad abgewandter Seite die erste Strahlteileroptik befestigt ist, so angetastet wird, daß die ebene Platte die Lage und Orientierung des Rades annimmt und die erste Strahlteileroptik in den Strahlengang der beiden Laserstrahlen gelangt, wobei die innerhalb der ersten Strahlteileroptik reflektierten Strahlen von der ebenen Platte weg verlaufen.

4.  Verfahren nach Anspruch 3, **dadurch gekennzeichnet**, daß Vorder- und Hinterräder jeweils einzeln nacheinander von der Platte angetastet werden.

5.  Verfahren nach Anspruch 3, **dadurch gekennzeichnet**, daß Vorder- und Hinterräder gleichzeitig von je einer Platte mit Strahlteileroptik angetastet werden und daß Koordinaten der durch die am Vorderrad angeordneten Strahlteileroptik durchgehenden Strahlen an positionsempfindlichen Photodetektoren einer Detektoreinheit zwischen Vorder- und Hinterrad, die die Laserstrahlen ansonsten passieren können, zusätzlich bestimmt werden.

6.  Verfahren nach Anspruch 3, **dadurch gekennzeichnet**, daß zwei Paare paralleler Laserstrahlen senkrecht übereinander parallel in Höhe der Räder am gesamten Kraftfahrzeug entlanglaufen und daß Vorder- und Hinterräder gleichzeitig von je einer Platte mit Strahlteileroptik so angetastet werden, daß die Strahlteileroptik der Platte am Vorderrad in den Strahlengang des oberen Laserstrahlenpaares und die Strahlteileroptik der Platte am Hinterrad in den Strahlengang des unteren Laserstrahlenpaares gelangen.

7.  Vorrichtung zur Bestimmung der Orientierung und Lage eines Objekts, mit

    -   zwei in einer Ebene senkrecht übereinander angeordneten Lasern (14a, 14b),

    -   zwei in einem Abstand in gleicher, fester Anordnung senkrecht zu den parallel verlaufenden Laserstrahlen (3a, 3b) der Laser (14a, 14b) ausgerichteten ersten positionsempfindlichen Photodetektoren (10, 11),

    -   einer ersten Strahlteileroptik (2), die in den Strahlengang der parallelen Laserstrahlen (3a, 3b) und abhängig von der Lage des Objekts einführbar ist, wobei die erste Strahlteileroptik (2) die Laserstrahlen (3a, 3b) in durch sie durchgehende Strahlen (9a, 9b) und in reflektierte Strahlen (6a, 6b) mit davon abweichender Richtung aufspaltet,

    -   zwei weiteren positionsempfindlichen Photodetektoren (7, 8) an der ersten Strahlteileroptik (2), die senkrecht in einer Ebene angeordnet sind, die ihrerseits senkrecht zu der Eintrittsfläche (4) der Laserstrahlen (3a, 3b) in die erste Strahlteileroptik (2) orientiert ist, und auf die die reflektierten Strahlen (6a, 6b) senkrecht auftreffen, und

    -   Mitteln zur Erfassung der jeweiligen Auftreffpunktkoordinaten der Laserstrahlen (3a, 3b, 6a, 6b, 9a, 9b) auf den Photodektoren (7, 8, 10, 11) und zur Berechnung der Orientierung und Lage des Objekts in Bezug zu der Referenzebene daraus.

8.  Vorrichtung nach Anspruch 7, **dadurch gekennzeichnet**, daß eine zusätzliche Strahlteileroptik (57) dauerhaft in fester Anordnung zu den Lasern (14a, 14b) in den Strahlengang der parallel verlaufenden Laserstrahlen (3a, 3b) vor der von der Lage des Objekts abhängigen ersten Strahlteileroptik (2) angeordnet ist, daß die von der zusätzlichen Strahlteileroptik (57) reflektierten Strahlen (58a, 58b) auf zwei zusätzliche, positionsempfindliche Photodetektoren (59, 60) treffen, die in fester Anordnung zu der zusätzlichen Strahlteileroptik (57) positioniert sind, und daß die durch die zusätzliche Strahlteileroptik (57) durchgehenden Strahlen (3a, 3b) auf die von der Lage des Objekts abhängigen ersten Strahlteileroptik (2) treffen und in durchgehende auf die ersten Photodetektoren (10, 11) treffende Strahlen (9a, 9b) und in reflektierte auf die an der ersten Strahlteileroptik (2) angeordneten, weiteren Photodetektoren (7, 8) treffende Strahlen (6a, 6b) aufspalten, und daß Mittel zur Erfassung der Auftreffpunktkoordinaten der Laserstrahlen (6a, 6b, 9a, 9b, 58a, 58b) auf den Photodetektoren (7, 8, 10, 11, 59, 60) und zur Berechnung der Lage und der Orientierung des Objekts daraus in Bezug zu der Referenzebene vorhanden sind.

9. Vorrichtung nach Anspruch 7 oder 8, **dadurch gekennzeichnet**, daß zur Spur- und Sturzwinkelbestimmung der Räder (30) eines Kraftfahrzeugs (40) eine Lasereinheit (27) vor dem in einem Fahrwerkstand angeordneten Kraftfahrzeug (40) und ihr gegenüber hinter dem Kraftfahrzeug (40) eine zugeordnete Detektoreinheit (28) vorgesehen sind, daß die Lasereinheit (27) rechts und links im Abstand der Breite des Kraftfahrzeugs (40) die zwei in einer Ebene senkrecht übereinander angeordneten Laser (14a, 14b) aufweist, deren parallele Laserstrahlen (3a, 3b) in Höhe der Räder (30) in Längsrichtung am gesamten Kraftfahrzeug (40) entlanglaufen, daß die Detektoreinheit (28) rechts und links in gleicher Anordnung wie die Laser (14a, 14b) die zwei in einer Ebene senkrecht übereinander angeordneten ersten positionsempfindlichen Photodetektoren (10, 11) aufweist, auf die die Laserstrahlen (3a, 3b) der Laser (14a, 14b) auftreffen, daß weiterhin eine Meßeinheit (29) vorgesehen ist, die aus einer ebenen Platte (1) und der auf der dem Rad (30) abgewandten Seite der ebenen Platte (1) befestigten ersten Strahlteileroptik (2) besteht, wobei die Meßeinheit (29) über die ebene Platte (1) so an den Umfang eines Rades (30) antastbar ist, daß die erste Strahlteileroptik (2) in den Strahlengang der parallelen Laserstrahlen (3a, 3b) eingeführt wird und die in der ersten Strahlteileroptik (2) reflektierten Strahlen (6a, 6b) von der ebenen Platte (1) weg verlaufen.

10. Vorrichtung nach Anspruch 9, **dadurch gekennzeichnet**, daß für jedes Rad (30) eine eigene Meßeinheit (29) sowie zwischen Vorder- und Hinterrad (30) auf jeder Seite des Kraftfahrzeugs (40) eine mittlere Detektoreinheit (44) mit weiteren positionsempfindlichen Photodetektoren (49, 50) vorgesehen sind.

11. Vorrichtung nach Anspruch 9, **dadurch gekennzeichnet**, daß für jedes Rad (30) eine eigene Meßeinheit (29) vorgesehen ist, daß die Lasereinheit (27) rechts und links im Abstand der Breite des Kraftfahrzeugs (40) zusätzlich zu dem ersten Laserpaar (14a, 14b) ein weiteres senkrecht unter dem ersten Laserpaar (14a, 14b) angeordnetes zweites Laserpaar (14c, 14d) aufweist, daß die parallelen, paarweise zusammengehörenden Laserstrahlen (3a, 3b, 3c, 3d) in Höhe der Räder (30) in Längsrichtung am gesamten Kraftfahrzeug (40) entlanglaufen, daß die Detektoreinheit (28) hinter dem Kraftfahrzeug (40) rechts und links in gleicher Anordnung wie die Laser (14a, , 14b, 14c, 14d) zusätzlich zu den ersten Photodetektoren (10, 11) zwei weitere senkrecht unter den ersten Photodetektoren (10, 11) angeordnete positionsempfindliche Photodetektoren (45, 46) aufweist, wobei dem oberen Laserstrahlenpaar (3a, 3b) die oberen ersten Photodetektoren (10, 11) und dem unteren Laserstrahlenpaar (3c, 3d) die unteren weiteren Photodetektoren (45, 46) sowie die Strahlteileroptik (2) der vorderen Meßeinheit (29) dem oberen Laserstrahlenpaar (3a, 3b) und die Strahlteileroptik (2) der hinteren Meßeinheit (29) dem unteren Laserstrahlenpaar (3c, 3d) zugeordnet sind.

12. Vorrichtung nach einem der Ansprüche 7 bis 11, **dadurch gekennzeichnet**, daß die Strahlteileroptik (2) als lichtdurchlässiger Würfel (39) der Kantenlänge A ausgebildet ist, der eine halbdurchlässige Spiegelfläche (5) aufweist, die einen Diagonalschnitt darstellt, der von den Flächendiagonalen der Grund- und Deckfläche sowie je einer senkrechten Kante der Eintrittsfläche (4) und der Rückseite (41) des Würfels (39) begrenzt ist, und daß auf der Rückseite (41) des Würfels (39) die positionsempfindlichen Photodetektoren (7, 8, 47, 48, bzw. 51, 52) angeordnet sind.

13. Vorrichtung nach einem der Ansprüche 7 bis 11, **dadurch gekennzeichnet**, daß die Strahlteileroptik (2) aus zwei parallel zueinander angeordneten lichtdurchlässigen Quadern (15, 16) besteht, wobei jeder Quader (15, 16) halbdurchlässige Spiegelflächen (17, 18) aufweist und auf der Rückseite (41) die positionsempfindlichen Photodetektoren (19, 20) angeordnet sind.

14. Vorrichtung nach einem der Ansprüche 7 bis 11, **dadurch gekennzeichnet**, daß die Strahlteileroptik (2) aus zwei parallel zueinander angeordneten lichtdurchlässigen Würfeln (21, 22) und einem in Richtung der Laserstrahlen (3a, 3b) hinter oder vor den Würfeln (21, 22) angeordneten weiteren Quader (23) besteht und daß jeder Würfel (21, 22) halbdurchlässige Spiegelflächen (42, 43) aufweist, und auf der Rückseite (41) die positionsempfindlichen Photodetektoren (24, 25) angeordnet sind.

**15.** Vorrichtung nach einem der Ansprüche 7 bis 11, **dadurch gekennzeichnet**, daß die beiden parallelen Laserstrahlen (3a, 3b) statt von zwei Lasern (14a, 14b) von einem Laser mit zugeordneter Strahlteileroptik erzeugbar sind.

**Claims**

**1.** A method of determining the orientation and position of an object in which two laser beams travelling in parallel to one another and spanning a reference plane

- the first time meet, without interference, two fixed first position-sensitive photodetectors arranged vertically to the laser beams and two pairs of incidence point coordinates are determined for the laser beams via their centres of intensity,

- the other time, a beam splitter lens system is introduced into the path of the laser beams, the position of the beam splitter lens system being dependent on the object and inside which the laser beams are split into beams passing therethrough and into beams reflected in directions deviating therefrom,

- the beams passing through meet the first position-sensitive photodetectors and their two pairs of incidence point coordinates are also determined,

- the reflected beams meet two further position-sensitive photodetectors arranged on the first beam splitter lens system and their two pairs of incidence point coordinates are also determined, and

- the orientation and position of the object is calculated from the four measured pairs of coordinates for the two laser beans meeting the first photodetectors with and without beam splitter lens system and from the two measured pairs of coordinates for the reflected laser beams meeting the further photodetectors in relation to the reference plane which is defined by the laser beams meeting the first photodetectors without interference.

**2.** A method according to claim 1, characterised in that an additional, fixed beam splitter lens system is permanently positioned in the path of the laser beams between the lasers and the first beam splitter lens system, which splits the laser beams into beams passing therethrough and into beams reflected in a direction deviating therefrom, that the reflected beams meet two additional, fixed position-sensitive photodetectors and their two pairs of incidence point coordinates are determined, that the beams passing through meet the first beam splitter lens system, the position of which is dependent on the object, and are split into beams passing therethrough and meeting the first photodetectors and into reflected beams meeting the further photodetectors arranged on the first beam splitter lens system, that the orientation and position of the object is calculated from the two measured pairs of coordinates of the laser beams meeting the first photodetectors, from the two measured pairs of coordinates of the beams reflected onto the photodetectors arranged on the first beam splitter lens system and from the two measured pairs of coordinates of the beams reflected onto the additional, fixed photodetectors, wherein the last-mentioned pairs of coordinates are used for on-line calibration of the reference plane in place of the pairs of coordinates of the laser beams meeting the first photodetectors without interference.

**3.** A method according to claim 1 or 2, characterised in that, in order to determine the trail angle and camber angle of the wheels of a motor vehicle, the parallel laser beams travel vertically above one another along the entire vehicle at the level of the wheels, that each wheel is touched vertically to the wheel axle on the outside of its outer periphery by a flat plate, on whose side facing away from the wheel the first beam splitter lens system is fixed, so that the flat plate assumes the position and orientation of the wheel and the first beam splitter lens system enters the path of the two laser beams, wherein the beams reflected inside the first beam splitter lens system travel away from the flat plate.

**4.** A method according to claim 3, characterised in that each front and rear wheel is individually touched one after another by the plate.

**5.** A method according to claim 3, characterised in that the front and rear wheels are each simultaneously touched by a plate having a beam splitter lens system and that the coordinates of the beams passing through the beam splitter lens system arranged on the front wheel are additionally determined at position-sensitive photodetectors of a detector unit between the front and rear wheel that the laser beams can otherwise pass through.

6. A method according to claim 3, characterised in that two pairs of parallel laser beams travel vertically above one another in parallel along the entire vehicle at the level of the wheels and that the front and rear wheels are each simultaneously touched by a plate having a beam splitter lens system so that the beam splitter lens system of the plate on the front wheel enters the path of the upper pair of laser beams and the beam splitter lens system of the plate on the rear wheel enters the path of the lower pair of laser beams.

7. An apparatus for determining the orientation and position of an object, having

- two lasers (14a, 14b) arranged vertically above one another in a plane,

- two first position-sensitive photodetectors (10, 11) aligned at a distance in the same fixed arrangement vertically to the parallel-travelling laser beams (3a, 3b) from the laser (14a, 14b),

- a first beam splitter lens system (2) which is introducible into the path of the parallel laser beams (3a, 3b) and is dependent on the position of the object, wherein the first beam splitter lens system (2) splits the laser beams (3a, 3b) into beams (9a, 9b) passing therethrough and into beams (6a, 6b) reflected in a direction deviating therefrom,

- two further position-sensitive photodetectors (7, 8) on the first beam splitter lens system (2) which are arranged vertically in a plane that is in turn oriented vertically to the incident face (4) for the laser beams (3a, 3b) in the first beam splitter lens system (2), and which the reflected beams (6a, 6b) meet vertically, and

- means of recording the incidence point coordinates of each laser beam (3a, 3b, 6a, 6b, 9a, 9b) on the photodetectors (7, 8, 10, 11) and of calculating the orientation and position of the object therefrom in relation to the reference plane.

8. A device according to claim 7, characterised in that an additional beam splitter lens system (57) is permanently arranged in a fixed arrangement with respect to the lasers (14a, 14b) in the path of the parallel-travelling laser beams (3a, 3b), in front of first beam splitter lens system (2) which is dependent on the position of the object, that the beams (58a, 58b) reflected by the additional beam splitter lens system (57) meet two additional position-sensitive photodetectors (59, 60) which are positioned in a fixed arrangement with respect to the additional beam splitter lens system (57), and that the beams (3a, 3b) passing through the additional beam splitter lens system (57) meet the first beam splitter lens system (2) which is dependent on the position of the object and are split into beams (9a, 9b) passing through and meeting the first photodetectors (10, 11) and into reflected beams (6a, 6b) meeting the further photodetectors (7, 8) arranged on the first beam splitter lens system (2), and that means of recording the incidence point coordinates of the laser beams (6a, 6b, 9a, 9b, 58a, 58b) are present on the photodetectors (7, 8, 10, 11, 59, 60) and means of calculating the position and the orientation of the object therefrom in relation to the reference plane are provided.

9. An apparatus according to claim 7 or 8, characterised in that, in order to determine the trail angle and camber angle of the wheels (30) of a motor vehicle (40), a laser unit (27) is provided in front of the motor vehicle (40) arranged in a chassis test stand and, thereopposite, a detector unit (28) allocated thereto is provided behind the motor vehicle (40), that the laser unit (27), on the right and left and the width of the motor vehicle (40) apart, has the two lasers (14a, 14b) arranged vertically above one another in a plane, the parallel laser beams (3a, 3b) of which travel in the longitudinal direction along the entire motor vehicle (40) at the level of the wheels (30), that the detector unit (28), on the right and left and in the same arrangenent as the lasers (14a, 14b), has the two first position-sensitive photodetectors (10, 11) arranged vertically above one another in a plane, which the laser beams (3a, 3b) of the lasers (14a, 14b) meet, that a measuring unit (29) consisting of a flat plate (1) and the first beam splitter lens system (2) fixed to the side of the flat plate (1) facing away from the wheel (30) is also provided, wherein the measuring unit (29) is touchable against the periphery of a wheel (30) via the flat plate (1) so that the first beam splitter lens system (2) is introduced into the path of the parallel laser beams (3a, 3b) and the beams (6a, 6b) reflected in the first beam splitter lens system (2) travel away from the flat plate (1).

10. An apparatus according to claim 9, characterised in that a separate measuring unit (29) is provided for each wheel (30) and a central detector unit (44) having further position-sensitive photodetectors (49, 50) is provided between the front and rear wheel (30) on each side of the motor vehicle (40).

11. An apparatus according to claim 9, characterised in that a separate measuring unit (29) is provided for each wheel

EP 0 593 067 B1

(30), that the laser unit (27), on the right and left and the width of the motor vehicle (40) apart, has, in addition to the first pair of lasers (14a, 14b), a further pair of lasers (14c, 14d) arranged vertically beneath the first pair of lasers (14a, 14b), that the parallel laser beams (3a, 3b, 3c, 3d) belonging in pairs travel in the longitudinal direction along the entire motor vehicle (40) at the level of the wheels (30), that the detector unit (28), behind the motor vehicle (40), on the right and left and in the same arrangement as the lasers (14a, 14b, 14c, 14d), has, in addition to the first photodetectors (10, 11), two further position-sensitive photodetectors (45, 46) arranged vertically beneath the first photodetectors (10, 11), wherein the upper first photodetectors (10, 11) are allocated to the upper pair of laser beams (3a, 3b) and the lower further photodetectors (45, 46) are allocated to the lower pair of laser beams (3c, 3d) and the beam splitter lens system (2) of the front measuring unit (29) is allocated to the upper pair of laser beams (3a, 3b) and the beam splitter lens system (2) of the rear measuring unit (29) is allocated to the lower pair of laser beams (3c, 3d).

12. An apparatus according to one of claims 7 to 11, characterised in that the beam splitter lens system (2) is designed as a light-transparent cube (39) of edge length A, which has a semi-transparent reflective surface (5) representing a diagonal section that is delimited by the plane diagonals of the bottom and top surfaces and each vertical edge of the incident face (4) and the rear side (41) of the cube (39), and that the position-sensitive photodetectors (7, 8, 47, 48 or 51, 52) are arranged on the rear side (41) of the cube (39).

13. An apparatus according to one of claims 7 to 11, characterised in that the beam splitter lens system (2) consists of two light-transparent cuboids (15, 16) arranged parallel to one another, wherein each cuboid (15, 16) has semi-transparent reflective surfaces (17, 18) and on the rear side (41) of which are arranged the position-sensitive photodetectors (19, 20).

14. An apparatus according to one of claims 7 to 11, characterised in that the beam splitter lens system (2) consists of two light-transparent cubes (21, 22) arranged parallel to one another and a further cuboid (23) arranged behind or in front of the cubes (21, 22) in the direction of the laser beams (3a, 3b) and that each cube (21, 22) has semi-transparent reflective surfaces (42, 43) and on the rear side (41) of which are arranged the position-sensitive photodetectors (24, 25).

15. An apparatus according to one of claims 7 to 11, characterised in that the two parallel laser beams (3a, 3b) are generatable by one laser having an allocated beam splitter lens system rather than by two lasers (14a, 14b).

**Revendications**

1. Procédé de détermination de l'orientation et de la position d'un objet, procédé dans lequel deux rayons laser s'étendant parallèlement l'un à l'autre en formant un plan de référence

   - tombent une fois sans entrave sur deux premiers photodétecteurs fixes, sensibles à la position, agencés perpendiculairement aux rayons laser, deux paires de coordonnées ponctuelles d'impact étant déterminées pour les rayons laser sur leurs centres d'intensité maximale,
   - une autre fois, on introduit dans la trajectoire des rayons laser un système optique diviseur de rayons dont la position dépend de l'objet et à l'intérieur duquel les rayons laser sont divisés en rayons qui traversent le système et en rayons réfléchis de direction qui s'en écarte,
   - les rayons traversants tombent sur les premiers photodétecteurs sensibles à la position et leurs deux paires de coordonnées ponctuelles d'impact sont également déterminées,
   - les rayons réfléchis tombent sur deux autres photodétecteurs, sensibles à la position, agencés dans le premier système diviseur de rayons et leurs deux paires de coordonnées ponctuelles d'impact sont également déterminées, et
   - l'orientation et la position de l'objet sont calculés à partir des quatre paires de coordonnées mesurées des deux rayons laser tombant sur les premiers photodétecteurs respectivement avec et sans système diviseur de rayons et à partir des deux paires de coordonnées mesurées des rayons laser réfléchis tombant sur les autres photodétecteurs par rapport au plan de référence, qui est établi par les rayons laser tombant sans entrave sur les premiers photodétecteurs.

2. Procédé selon la revendication 1, caractérisé en ce qu'un système optique diviseur de rayons fixe supplémentaire, qui est disposé en permanence dans la trajectoire des rayons laser entre le laser et le premier système optique diviseur de rayons, divise les rayons laser en rayons qui le traversent et en rayons réfléchis de direction qui s'en écarte, en ce que les rayons réfléchis tombent sur deux photodétecteurs fixes supplémentaires, sensibles à la position, et leurs deux paires de coordonnées ponctuelles d'impact sont déterminées, en ce que les rayons traversants tombent sur le premier système optique diviseur de rayons, dont la position dépend de l'objet, et sont divisés en rayons, qui le traversent, tombant sur les premiers photodétecteurs et en rayons réfléchis tombant sur les autres photodétecteurs agencés dans le premier système optique diviseur de rayons, en ce que l'orientation et la position de l'objet sont calculées à partir des deux paires de coordonnées mesurées des rayons réfléchis sur les photodétecteurs agencés dans le premier système optique diviseur de rayons et à partir des deux paires de coordonnées mesurées des rayons réfléchis sur les photodétecteurs fixes supplémentaires, ces dernières paires de coordonnées étant utilisées en lieu et place des paires de coordonnées des rayons laser tombant sans entrave sur les premiers photodétecteurs pour étalonner en ligne le plan de référence.

3. Procédé selon la revendication 1 ou 2, caractérisé en ce que, pour déterminer la chasse et l'angle de pinçage des roues d'un véhicule automobile, les rayons laser parallèles s'étendent verticalement l'un au-dessus de l'autre à hauteur des roues le long de la totalité du véhicule, en ce qu'une roue est mise en contact, respectivement perpendiculairement à son axe, sur sa périphérie, à l'extérieur, avec une plaque plane sur le côté, opposé à la roue, duquel est fixé le premier système diviseur de rayons, de sorte que la plaque plane adopte la position et l'orientation de la roue et que le premier système optique diviseur de rayons soit ajusté dans la trajectoire des deux rayons laser, les rayons réfléchis à l'intérieur du premier système optique diviseur de rayons étant écartés de la plaque plane.

4. Procédé selon la revendication 3, caractérisé en ce que les roues avant et arrière viennent en contact respectivement individuellement l'une après l'autre avec la plaque.

5. Procédé selon la revendication 3, caractérisé en ce que les roues avant et arrière viennent en contact simultanément respectivement avec une plaque portant un système optique diviseur de rayons et en ce que les coordonnées des rayons traversant le système optique diviseur de rayons agencé sur la roue avant sur des photodétecteurs sensibles à la position d'une unité de détection entre la roue avant et la roue arrière, qui peuvent laisser passer les rayons laser, sont également déterminées.

6. Procédé selon la revendication 3, caractérisé en ce que deux paires de rayons laser parallèles s'étendent verticalement l'un au-dessus de l'autre parallèlement le long du véhicule automobile entier et en ce que les roues avant et arrière viennent en contact simultanément avec respectivement une plaque portant un système optique diviseur de rayons de telle sorte que le système optique diviseur de rayons de la plaque sur la roue avant s'ajuste dans la trajectoire de la paire supérieure de rayons laser et que le système optique diviseur de rayons de la plaque sur la roue arrière soit ajusté dans la trajectoire de la paire inférieure de rayons laser.

7. Dispositif de détermination de l'orientation et de la position d'un objet, comportant :

   - deux lasers (14a, 14b) agencés dans un plan l'un au dessus de l'autre verticalement,
   - deux premiers photodétecteurs (10, 11) sensibles à la position agencés à une certaine distance mutuelle dans un agencement fixe similaire 5 perpendiculairement aux rayons (3a, 3b), s'étendant parallèlement, des lasers (14a, 14b),
   - un premier système optique diviseur de rayons (2), qui peut être introduit dans la trajectoire des rayons laser parallèles (3a, 3b) en fonction de la position de l'objet, le premier système optique diviseur de rayons (2) divisant les rayons laser (3a, 3b) en rayons (9a, 9b) qui le traversent et en rayons réfléchis (6a, 6b) de direction qui s'en écarte,
   - deux autres photodétecteurs (7, 8) sensibles à la position dans le premier système optique diviseur de rayons (2), qui sont agencés verticalement dans un plan, qui est orienté, pour sa part, perpendiculairement à la surface d'entrée (4) des rayons laser (3a, 3b) dans le premier système optique diviseur de rayons (2) et sur lequel les rayons réfléchis (6a, 6b) tombent verticalement, et
   - des moyens permettant de déterminer les coordonnées ponctuelles d'impact respectives des rayons laser (3a,3b) sur les photodétecteurs (7, 8, 10, 11) et d'en tirer, par calcul, l'orientation et la position de l'objet par rapport au plan de référence.

8. Dispositif selon la revendication 7, caractérisé en ce qu'un système optique diviseur de rayons supplémentaire (57) est agencé en permanence en position fixe vis-à-vis des lasers (14a, 14b) dans la trajectoire des rayons laser (3a, 3b) s'étendant parallèlement devant le premier système optique diviseur de rayons (2) dépendant de la position de l'objet, en ce que les rayons (58a, 58b) réfléchis par le système optique diviseur de rayons supplémentaire (57) tombent sur deux photodétecteurs supplémentaires (59, 60) sensibles à la position, qui sont disposés en position fixe vis-à-vis du système optique diviseur de rayons supplémentaire (57), et en ce que les rayons (3a, 3b) traversant le système optique diviseur de rayons supplémentaire (57) tombent sur le premier système optique diviseur de rayons (2) dépendant de la position de l'objet et sont divisés en rayons traversants (9a, 9b) tombant sur les premiers photodétecteurs (10, 11) et en rayons réfléchis (6a, 6b) tombant sur les autres photodétecteurs (7, 8) agencés dans le premier système optique diviseur de rayons (2), et en ce qu'il est prévu des moyens pour déterminer les coordonnées ponctuelles d'impact des rayons laser (6a, 6b, 9a, 9b, 58a, 58b) sur les photodétecteurs (7, 8, 10, 11, 59, 60) et en tirer par calcul la position et l'orientation de l'objet par rapport au plan de référence.

9. Dispositif selon la revendication 7 ou 8, caractérisé en ce que, pour déterminer la chasse et l'angle de pinçage des roues (30) d'un véhicule automobile (40), il est prévu une unité laser (27) devant le véhicule automobile (40) agencé dans le banc d'essai automobile et, à son opposé, derrière le véhicule automobile (40), une unité de détection correspondante (28), en ce que l'unité laser (27) présente, à droite et à gauche, à une certaine distance sur la largeur du véhicule automobile (40), les deux laser (14a, 14b) agencés verticalement, l'un au-dessus de l'autre, dans un plan, lasers dont les rayons parallèles (3a, 3b) s'étendent, à hauteur des roues (30), dans la direction longitudinale, le long de tout le véhicule automobile (40), en ce que l'unité de détection (28) présente, à droite et à gauche, dans le même agencement que les lasers (14a, 14b), les deux premiers photodétecteurs (10, 11) sensibles à la position agencés dans un plan, verticalement l'un au-dessus de l'autre, photodétecteurs sur lesquels les rayons (3a, 3b) des lasers (14a, 14b) tombent, en ce que, par ailleurs, il est prévu une unité de mesure (29) qui est constituée d'une plaque plane (1) et du premier système optique diviseur de rayons (2) fixé sur le côté de la plaque plane (1) opposé à la roue (30), l'unité de mesure (29) pouvant être mise en contact, via la plaque plane (1), avec la périphérie d'une roue (30) de telle sorte que le premiers système optique diviseur de rayons (2) soit inséré dans la trajectoire des rayons laser parallèles (3a, 3b) et que les rayons (6a, 6b) réfléchis dans le premier système optique diviseur de rayons (2) s'écartent de la plaque plane (1).

10. Dispositif selon la revendication 9, caractérisé en ce qu'il est prévu, pour chaque roue (30), une unité de mesure propre (29) ainsi qu'entre les roues avant et arrière (30), sur chaque côté du véhicule automobile (40), une unité de détection centrale (44) avec d'autres photodétecteurs (49, 50) sensibles à la position.

11. Dispositif selon la revendication 9, caractérisé en ce que, pour chaque roue (30), il est prévu une unité de mesure propre (29), en ce que l'unité laser (27) présente, à droite et à gauche, à une certaine distance sur la largeur du véhicule automobile (40), en plus de la première paire de lasers (14a, 14b), une deuxième paire de lasers (14c, 14d) agencée verticalement en dessous de la première paire de lasers (14a, 14b), en ce que les rayons laser parallèles (3a, 3b, 3c, 3d) regroupés par paires s'étendent, à hauteur des roues (30), dans la direction longitudinale le long de tout le véhicule automobile (40), en ce que l'unité de détection (28) présente derrière le véhicule automobile (40), à droite et à gauche, dans le même agencement que les lasers (14a, 14b, 14c, 14d), outre les premiers photodétecteurs (10, 11), deux autres photodétecteurs (45, 46) sensibles à la position agencés verticalement en dessous des premiers photodétecteurs (10, 11), les premiers photodétecteurs supérieurs (10, 11) étant affectés à la paire supérieure de rayons lasers (3a, 3b) et les autres photodétecteurs inférieurs (45, 46) étant affectés à la paire inférieure de rayons lasers (3c, 3d), tandis que le système optique diviseur de rayons (2) de l'unité de mesure avant (29) est affecté à la paire supérieure de rayons lasers (3a, 3b) et le système optique diviseur de rayons (2) de l'unité de mesure arrière (29) est affecté à la paire inférieure de rayons lasers (3c, 3d).

12. Dispositif selon l'une quelconque des revendications 7 à 11, caractérisé en ce que le système optique diviseur de rayons (2) se présente sous la forme d'un cube transparent (39) de longueur de côté A, qui présente une surface de miroir semi-transparente (5), qui a une section diagonale qui est délimitée par les diagonales de la surface de base et de la surface du sommet ainsi que, respectivement, par un côté vertical de la surface d'entrée (4) et de la face postérieure (41) du cube, et en ce que les photodétecteurs (7, 8, 47, 48 ou 51, 52) sensibles à la position sont agencés sur la face postérieure (41) du cube (39).

13. Dispositif selon l'une quelconque des revendications 7 à 11, caractérisé en ce que le système optique diviseur de rayons (2) est constitué de deux parallélépipèdes transparents (15, 16) agencés l'un parallèlement à l'autre, chaque parallélépipède présentant des faces miroirs semi-transparentes (17, 18) et les photodétecteurs (19, 20) sensibles à la position étant agencés sur la face postérieure (41).

14. Dispositif selon l'une quelconque des revendications 7 à 11, caractérisé en ce que le système optique diviseur de rayons (2) est constitué de deux cubes transparents (21, 22) agencés l'un parallèlement à l'autre et d'un autre parallélépipède (23) agencé, dans la direction des rayons laser (3a, 3b), derrière ou devant les cubes (21, 22) et en ce que chaque cube (21, 22) présente des surfaces miroirs semi-transparentes (42, 43), et en ce que les photodétecteurs (24, 25) sensibles à la position sont agencés sur la face postérieure (41).

15. Dispositif selon l'une quelconque des revendications 7 à 11, caractérisé en ce que les deux rayons laser parallèles (3a, 3b) peuvent être produits par un laser auquel est affecté un système optique diviseur de rayons, en lieu et place de deux lasers (14a, 14b).

Fig. 1

Fig. 2

Fig. 3

Fig. 4

Fig.5

Fig. 6

EP 0 593 067 B1

Fig 7

EP 0 593 067 B1

Fig. 8

Fig. 9

Fig. 10

Fig. 11

Fig. 12

EP 0 593 067 B1

Fig. 13

EP 0 593 067 B1

Fig. 14